# EUROPÄISCHE PATENTSCHRIFT

(11) **EP 2 438 333 B1**
(45) Veröffentlichungstag und Bekanntmachung des Hinweises auf die Patenterteilung: **18.05.2016**
(21) Anmeldenummer: 09776687.7
(22) Anmeldetag: 05.06.2009
(51) Int. Cl.: F16K 7/02, F16K 7/10

(54) **DRUCKBEAUFSCHLAGBARE DICHTUNGSANORDNUNG**
PRESSURISABLE SEALING ASSEMBLY
ENSEMBLE D'ÉTANCHÉITÉ SOUMIS À LA PRESSION

(43) Veröffentlichungstag der Anmeldung: 11.04.2012
(73) Patentinhaber: Stadler, Achim, 69469 Weinheim (DE)
(72) Erfinder: BARTH, Armin, 69517 Gorxheimertal (DE)
(74) Vertreter: Vonnemann, Gerhard
(86) Internationale Anmeldenummer: PCT/EP2009/004046
(87) Internationale Veröffentlichungsnummer: WO 2010/139348

(56) Entgegenhaltungen:
- EP-A2- 0 264 973
- DE-U1- 29 803 918
- FR-A- 1 443 237
- FR-A1- 2 507 737
- FR-A1- 2 856 456
- GB-A- 1 433 884
- JP-A- 11 037 339
- US-A- 3 224 734
- US-A- 5 209 266

## Beschreibung

Die Erfindung bezieht sich auf eine Dichtungsanordnung bestehend aus einem Dichtelement und einem Absperrkopf, wobei das Dichtelement an dem Absperrkopf aufgenommen ist, zum Absperren oder Verengen eines Strömungsquerschnittes einer Pipeline oder einer Rohrleitung, wobei das Dichtelement am Absperrkopf mindestens einen druckbeaufschlagten Hohlraum begrenzt, wobei dieses einen in einer dickeren Wandstärke ausgeführten Abschnitt einer Mantelfläche aufweist.

Solche Dichtelemente sind aus US 5209266, FR 2507737, FR 1443237, DE 29803918, EP 0264973, JP 11037339, US 3224734, GB 1433884 und FR 2856456 bekannt. Allen vorbekannten Dichtelementen ist gemeinsam, dass sie eine im wesentlichen konstante Wandstärke aufweisen.

Zur Reparatur von Pipelines oder Rohren, die unter Druck stehende Medien wie z.B. Öl, Gas oder auch Wasser führen, können spezielle Stopfen eingesetzt werden, die Teil eines Absperrkopfes sein können. Der Absperrkopf ist Bestandteil einer Hot-Tapping-Anlage, mit der z.B. unter Druck stehende Pipelines repariert werden. Hot-Tapping bedeutet "Anbohren unter Druck" und stellt ein Verfahren dar, bei dem ein druckführender Körper angebohrt und ein Abzweig oder ein Bypass oder eine Umgehungsleitung hergestellt werden kann, wenn Rohrleitungsabschnitte zu reparieren oder gar auszutauschen sind. Der Prozess des Hot-Tappings läuft ohne Betriebsunterbrechungen und Leckagen ab, was den Vorteil hat, dass die Pipeline während der Reparatur weiter betrieben werden kann. Neben dem Verfahren des Hot-Tappings (Anbohren unter Druck) hat sich das Line-Stopping-Verfahren etabliert. Das Line-Stopping-Verfahren ist ein Verfahren, bei dem der Medienstrom in einem Abschnitt einer Rohrleitung zeitweise unterbrochen werden kann. Die Unterbrechung des Mediumstromes, der die Rohrleitung durchströmt, kann zum Zwecke von Reparaturen, Umlegungen und Umbauten erfolgen.

Bei Anlagen, die zur Durchführung des Hot-Tapping-Verfahrens bzw. des

Line-Stopping-Verfahrens eingesetzt werden können, werden in der Regel herkömmliche elastomere Dichtscheiben eingesetzt, die jedoch allesamt die sehr speziellen Bedürfnisse und Anforderungen im Einsatz immer noch nicht 100%-ig prozesssicher erfüllen. Beispiele für bereits bestehende Dichtungsprinzipien stammen von Firmen wie z.B. IPSCO GmbH oder T.D. Williamson, Inc., Tulsa, Oklahoma USA. So stellt z.B. die T.D. Williamson Inc., Tulsa, Oklahoma, USA "stopple plugging machines" zur Verfügung, mit denen ein Pipelinesystem zur Durchführung von Reparaturen ohne Unterbrechung weiterbetrieben werden kann. Das aus dem Bulletin 501.0 von TDW Inc. bekannte (1. März 1981) System umfasst einen Hydraulikzylinder, ein Absperrkopfgehäuse sowie einen Absperrkopf. Mit dem Hydraulikzylinder können eine Vielzahl unterschiedliche Grössen aufweisender Absperrköpfe betrieben werden. In der Regel wird die aus dem Bulletin No. 501.0 vom 1. März 1981 eingesetzte "stopple plugging machine" an ein Fitting, das auf ein T-Stück der Pipeline angeflanscht ist, aufgebracht. Auf diesen wird das Gehäuse, in dem sich der Absperrkopf befindet, angeflanscht und anschliessend nach Beaufschlagung des Hydraulikzylinders der Absperrkopf in das T-Stück eingefahren. Der Absperrkopf der "stopple plugging machine" (vgl. Bulletin 501 vom 1. März 1981) weist an seinem unteren Ende eine auf die untere Innenwand der Pipeline auf treffende Rolle auf, welche den Absperrkopf bei der weiteren im Wesentlichen in vertikale Richtung erfolgenden Einfahrbewegung ausrichtet und in die Dichtposition überführt. Am Umfang des Absperrkopfes ist eine Dichtscheibe aufgenommen, die aus einem Elastomermaterial gefertigt ist. Beim Einfahren des Absperrkopfes in den abzudichtenden Strömungsquerschnitt wird dieser mehrmals hin und herbewegt, um so die Innenwand des Rohres oder der Pipeline zu "putzen", um Anlagerungen dort abzulösen. Dabei kann die Dichtscheibe so stark beschädigt werden, dass eine Abdichtung schlussendlich nicht mehr möglich ist. Ist der Absperrkopf in die Dichtposition überführt, wird der in der Pipeline herrschende Druck des Mediums vom Absperrkopf abgesperrt. Der in Strömungsrichtung in der Pipeline oder der Rohrleitung herrschende Druck drückt eine Dichtscheibe gegen die Innenwand der Pipeline und dichtet diese ab.

Es hat sich jedoch gezeigt, dass ein sehr grosser Radialspalt zwischen dem Absperrkopf (Stopfen) und der Innenwand des Pipelinerohres von 20 mm und mehr mit den bestehenden Lösungen nicht vollständig prozesssicher abgedichtet werden kann. Stark verformte zylindrische Rohre, deren Strömungsquerschnitt oval verformt ist, lassen sich mit der am Absperrkopf aufgenommenen ringförmig ausgebildeten Dichtscheibe nicht prozesssicher abdichten, da auf Grund des Ovals relativ grosse Spalte verbleiben, die durch eine kreisrund ausgeführte Dichtscheibe eben nicht abgedichtet werden können. Des Weiteren hat sich gezeigt, dass bei bisherigen Lösungsansätzen von verformbaren Dichtelementen, diese ganz oder teilweise durch den abzudichtenden Druck unterwandert werden und sich auf Grund des ständigen Anstehens des abzudichtenden Druckes die gesamte Dichtung samt Absperrkopf nicht mehr aus dem abgedichteten Strömungsquerschnitt demontieren lässt.
Der vorliegenden Erfindung liegt die Aufgabe zu Grunde, ein Dichtungsprinzip bereitzustellen, welches z.B. während einer Reparatur eines Rohrleitungsabschnittes einen in diesem herrschenden Strömungsdruck: dauerhaft standhält, daher im Wege des HotTappings einsetzbar ist und sich nach durchgeführter Reparatur problemlos - da unverformt - aus dem Strömungsquerschnitt herausfahren lässt.

Die Lösung dieser Aufgabe gelingt bei einer Dichtungsanordnung bestehend aus einem Dichtelement einem Absperrkopf, wobei das Dichtelement an dem Absperrkopf aufgenommen ist, zum Absperren oder Verengen eines Strömungsquerschnittes einer Pipeline oder einer Rohrleitung, wobei das Dichtelement am Absperrkopf mindestens einen druckbeaufschlagten Hohlraum begrenzt, wobei dieses einen in einer dickeren Wandstärke ausgeführten Abschnitt einer Mantelfläche aufweist, wobei dieser Abschnitt der Mantelfläche um eine Befestigungsstelle des druckbeaufschlagbaren Dichtelementes scharnierartig radial auslenkbar ist und mit der Mantelfläche bei Druckbeaufschlagung pᵢ des Hohlraumes eine Innenwand der Pipeline oder der Rohrleitung abdichtet.

Erfindungsgemäss wird ein bevorzugt aus metallischem Material gefertigter Basis- und Aufnahmekörper vorgeschlagen, der insbesondere als Stopfenelement eines Absperrkopfes dient und an dessen Umfang das Dichtelement der erfindungsgemäss vorgeschlagenen Dichtungsanordnung aufgenommen ist. Dieses ist bevorzugt beidseitig in axialer Richtung statisch form- und kraftschlüssig abgedichtet. Das druckbeaufschlagbare Dichtelement ist in radiale Richtung bei Druckbeaufschlagung expandierbar. Die Expansion des Dichtelementes in radiale Richtung zur Überbrückung von Radialspalten in der Grössenordnung von 20 bis 30 mm und mehr wird druckbeaufschlagt und legt sich mit seiner äusseren Mantelfläche dichtend an die Innenseite des abzudichtenden Rohrleitungsquerschnittes an. Diese ist bei Druckbeaufschlagung des Dichtelementes in radiale Richtung abgedichtet, wobei die Abdichtung einem abzudichtenden Druckniveau von 10 bar bis 80 bar und mehr standhält.

Durch Beaufschlagung mit einem Druckmedium, wie z.B. Druckluft oder einem Hydraulikfluid, wird das druckbeaufschlagbare Dichtelement der erfindungsgemäss vorgeschlagenen Dichtungsanordnung ähnlich wie ein klappbares Scharnier durch einen in das Dichtelement integrierten und der Druckseite zugewandten Blähbalg oder eine Blähfeder oder einen dünnwandig ausgeführten Abschnitt der Mantelfläche aufgestellt. Bei Druckbeaufschlagung des Hohlraumes unterhalb des Dichtelementes wird ein in erhöhter Materialstärke ausgeführter Abschnitt der Mantelfläche scharnierartig aufgestellt und an die Innenwand des abzudichtenden Rohrleitungsquerschnittes angestellt und während der Druckbeaufschlagung des Dichtelementes in dieser Abdichtposition gehalten. Der dünnwandig ausgebildete Bereich bzw. ein Faltenbalg oder eine Blähfeder oder dergleichen dient als Stellelement zur scharnierartig erfolgenden Aufstellung des Bereiches der Mantelfläche des druckbeaufschlagbaren Dichtelementes, der in einer erhöhten Wandstärke ausgebildet ist und der sich an die Innenwand des abzudichtenden Rohres oder Rohrleitungsabschnittes anschmiegt. Durch das druckbeaufschlagbare Dichtelement der erfindungsgemäss vorgeschlagenen Dichtungsanordnung kann eine Absperrung grosser Radialspalte in der Grössenordnung von 20 mm bis 30 mm zwischen dem Umfang des Absperrkopfes und dem Innendurchmesser des abzudichtenden Strömungsquerschnittes auch bei einem erhöhten Druckniveau gewährleistet werden. Die Abdichtung auch höherer Drücke durch ein umlaufendes dichtes Anschmiegen mindestens einer, bevorzugt mehrerer Dichtlippen an einer formstabilen, dicker ausgelegten Seite des Dichtelementes der erfindungsgemäss vorgeschlagenen Dichtungsanordnung an die Rohrinnenwandung erreicht. Bevorzugt wird die mindestens eine Dichtlippe durch den in Strömungsrichtung des Mediums anstehenden Druck zusätzlich an den Innendurchmesser der abzudichtenden Pipeline angestellt, wodurch ein prozesssicheres Abdichten unterstützt wird. Dies ermöglicht zudem, dass auch extrem unrunde, bereits deformierte oder verwundene Rohre abgedichtet werden können.

Die Mündung für eine Druckbeaufschlagungsbohrung eines Innenraumes des Dichtelementes liegt an der Mantelfläche des Absperrkopfes unterhalb eines in grösserer Wandstärke ausgebildeten Bereiches der Dichtlippe. Eine Entlüftung dieses Hohlraumes erfolgt erforderlichenfalls durch Anlegen eines Unterdruckes an einer ebenfalls im Hohlraum unterhalb des druckbeaufschlagbaren Dichtelementes mündenden Bohrung. Durch einfaches Entlüften und ein erforderlichenfalls erfolgendes Anlegen von Unterdruck wird der grosse radiale Spalt zwischen dem Aussendurchmesser des druckbeaufschlagbaren Dichtelementes und der Innenwand des Rohres ebenso prozesssicher wieder freigegeben.

Das druckbeaufschlagbare Dichtelement der erfindungsgemäss vorgeschlagenen Dichtungsanordnung kann in einer ersten Ausführungsvariante z.B. U-förmig ausgebildet werden und auf der innenliegenden Seite wulstförmige Verdickungen aufweisen, mit denen das druckbeaufschlagbare Dichtelement z.B. in Nuten im Bereich der Stirnseiten des Absperrkopfes fixiert wird. Während in einer ersten

Ausführungsform des druckbeaufschlagbaren Dichtelementes der erfindungsgemäss vorgeschlagenen Dichtungsanordnung an dessen Mantelfläche ein in geringerer Wandstärke ausgebildeter Bereich, der in einen mit grösserer Wandstärke ausgebildeten Bereich übergeht, ausgeführt sein kann, kann in einer weiteren, zweiten Ausführungsform des druckbeaufschlagbaren Dichtelementes der erfindungsgemäss vorgeschlagenen Dichtungsanordnung der in einer grösseren Wandstärke ausgebildete Bereich aussen mit einer Dichtlippe versehen sein. Diese Dichtlippe ist radial aussenliegend angeordnet, von der Aussenmantelfläche des beaufschlagbaren Dichtelementes beabstandet und wird durch den in Strömungsrichtung wirkenden Druck aufgeweitet, was das vollumfängliche Anschmiegen der Dichtlippe an die Innenwandung des abzudichtenden Rohres noch unterstützt. Im druckbeaufschlagten Zustand des Dichtelementes liegt dies in einer axialen Dichtlänge entlang der Innenwand des abzudichtenden Strömungsquerschnittes an.

In Abwandlung dieser weiteren, zweiten Ausführungsvariante des druckbeaufschlagbaren Dichtelementes der erfindungsgemäss vorgeschlagenen Dichtungsanordnung kann der in grösserer Wandstärke ausgebildete verdickte Bereich der Formdichtung an seiner Mantelfläche in dem Bereich, an dem der abzudichtende Druck ansteht, mit mehreren Dichtlippen versehen sein, die in Strömungsrichtung gesehen kaskadenförmig hintereinanderliegend angeordnet sind und die die Abdichtwirkung darstellen.

In einer weiteren, vierten Ausführungsform des druckbeaufschlagbaren Dichtelementes der erfindungsgemäss vorgeschlagenen Dichtungsanordnung werden die wulstartigen Verdickungen der Mantelfläche ausgeführt, so dass sich in radiale Richtung verlaufende statische Dichtwülste ergeben. In diesem Falle ist das druckbeaufschlagbare Dichtelement der erfindungsgemäss vorgeschlagenen Dichtungsanordnung nicht U-förmig ausgeführt, sondern nimmt die Art einer stirnflächenfrei ausgebildeten Hülse an, wobei die in den vorstehenden drei Ausführungsvarianten zur Fixierung am druckbeaufschlagbaren Dichtelement ausgebildeten wulstartigen Verdickungen gemäss dieser vierten Ausführungsvariante an den Enden der Mantelfläche des hülsenförmig ausgebildeten Dichtelementes liegen.

In einer weiteren, fünften Ausführungsform des der Erfindung zu Grunde liegenden Gedankens ist das druckbeaufschlagbare Dichtelement mit einer einem Faltenbalg ähnlichen Blähfeder ausgeführt. Diese Blähfeder verläuft in der Mantelfläche des druckbeaufschlagbaren Dichtelementes der erfindungsgemäss vorgeschlagenen Dichtungsanordnung z.B. in wellen- oder zickzackförmiger Anordnung. Bei dieser fünften Ausführungsform des druckbeaufschlagbaren Dichtelementes befinden sich die wulstartigen Verdickungen zur Fixierung des druckbeaufschlagbaren Dichtelementes an der Innenseite ähnlich den vorstehend skizzierten Ausführungsvarianten mit Ausnahme der vierten Ausführungsvariante.

Das druckbeaufschlagbare Dichtelement der erfindungsgemäss vorgeschlagenen Dichtungsanordnung kann in axiale Richtung gesehen an beiden Stirnseiten mit Stirnflächen versehen sein, an denen wiederum Dichtwülste zur Fixierung ausgeführt sein können. Alternativ zu dieser Ausführungsform des druckbeaufschlagbaren Dichtelementes der erfindungsgemäss vorgeschlagenen Dichtungsanordnung ist dessen hülsenförmige Ausführung denkbar. In diesem Falle entfallen die Stirnflächen an den axialen Enden des im Wesentlichen hülsenförmig ausgebildeten, druckbeaufschlagbaren Dichtelementes an der Aussenseite; d.h. an der Aussenmantelfläche der Hülse befinden sich eine erste wulstartige Verdickung und eine zweite wulstartige Verdickung, mit der das in Hülsenform ausgebildete druckbeaufschlagbare Dichtelement über Spannringe an einem Absperrkopf bzw. in einem Absperrkopf befestigt werden kann.

Die Befestigung des druckbeaufschlagbaren Dichtelementes der erfindungsgemäss vorgeschlagenen Dichtungsanordnung am Umfang eines Absperrkopfes erfolgt in der Regel über die obenstehend bereits erwähnten Wülste, die unter Ausbildung eines Übergriffes in axiale Richtung durch Spannringe fixiert werden. Durch die Formgebung der Übergriffe kann der Verformungsweg der

Mantelfläche des druckbeaufschlagbaren Dichtelementes der erfindungsgemäss vorgeschlagenen Dichtungsanordnung beeinflusst bzw. vorgegeben werden. Bei der Druckbeaufschlagung einer Kammer, in die eine Druckbohrung und/oder eine Entlüftungsbohrung mündet, wird die Mantelfläche des druckbeaufschlagbaren Dichtelementes so verformt, dass sich dessen Aussenwand unter Überbrückung eines Spaltes zur Innenwand der abzudichtenden Pipeline bzw. des abzudichtenden druckführenden Rohres anschmiegt. Der abzudichtende Druck des Mediums wirkt in Aufweitungsrichtung auf die oberhalb eines Freiraums ausgebildete mindestens eine Dichtlippe, die auf Grund der Wirkung des anstehenden abzudichtenden Druckes stärker an die Innenseite der abzudichtenden Rohrleitung angepresst wird, so dass die Dichtwirkung zusätzlich unterstützt wird.

Zusätzlich zu den die Aussenflächen des druckbeaufschlagbaren Dichtelementes der erfindungsgemäss vorgeschlagenen Dichtungsanordnung überdeckenden Übergriffen, können am Absperrkopf Stützschultern ausgebildet sein, auf denen sich im nicht druckbeaufschlagten Zustand des druckbeaufschlagbaren Dichtelementes dessen Innenwand abstützt. Über die Formgebung und Konturierung der die Innenmantelfläche des druckbeaufschlagbaren Dichtelementes kontaktierenden Stützschultern kann der Verformungsweg desselben in radialer Richtung ebenfalls vorgegeben werden.

Der oder die Spannringe, mit denen das druckbeaufschlagbare Dichtelement einen Hohlraum am Absperrkopf überdeckend, in diesen aufgenommen wird, können sowohl ein- als auch zweiteilig ausgeführt sein. In einteiliger Ausführung der Spannringe werden diese vorteilhaft in nutförmigen Ausnehmungen an Stirnseiten des Absperrkopfes, in dem eine Anlenköffnung ausgebildet ist, befestigt.

Die erfindungsgemäss vorgeschlagene Lösung der Dichtungsanordnung zeichnet sich darüber hinaus dadurch aus, dass in diese eine Abstützfunktion auf Grund hoher zu beherrschender Druckdifferenzen integriert ist. Diese Abstützfunktion kann z.B. durch eine Gewebearmierung des druckbeaufschlagbaren Dichtelementes als einvulkanisiertes Material, z.B. Nomex-Gewebe, Aramid-Gewebe, Kevlarfaser gestaltet sein. Ebenso denkbar ist ein PTFE-Winkelband sowie ein PolyamidWinkelband, oder auch ein Federstahlband, in Form einer geschlitzten Stützwinkelhülse.

Diese Verstärkung wird bevorzugt an der Einspannstelle des druckbeaufschlagbaren Dichtelementes der erfindungsgemäss vorgeschlagenen Dichtungsanordnung an der Aussenseite angebracht, an der Atmosphärendruck herrscht und die auf der dem abzudichtenden Druck abgewandten Seite liegt. Speziell in diesem Bereich tritt die grösste Druckdifferenz auf, welche bei allen bisherigen Lösungen als grosse Schwachstelle und hauptsächliche Ausfallursache zu nennen ist.

Alternativ zur obenstehend geschilderten Abstützfunktion durch Integration eines Verstärkungsgewebes in das Material des druckbeaufschlagbaren Dichtelementes kann die Verstärkung als formstabile Klappe ausgeführt sein, wobei das Scharnier, um welches ein dicker ausgeführter Mantelflächenbereich des druckbeaufschlagbaren Dichtelementes ausgelenkt wird, z.B. durch einen der Übergriffe der Spannringe gebildet wird.
Anhand der Zeichnung wird die Erfindung nachstehend eingehend beschrieben.

Es zeigt:
- Figur 1: eine erste Ausführungsform des druckbeaufschlagbaren Dichtelementes der erfindungsgemäss vorgeschlagenen Dichtungsanordnung mit Mantelflächenbereichen unterschiedlicher Wandstärke,
- Figur 2: eine zweite Ausführungsform des druckbeaufschlagbaren Dichtelementes der erfindungsgemäss vorgeschlagenen Dichtungsanordnung mit an einem Mantelflächenbereich ausgebildeter auslenkbarer Dichtlippe,
- Figur 3: eine dritte Ausführungsvariante des druckbeaufschlagbaren Dichtelementes der erfindungsgemäss vorgeschlagenen Dichtungsanordnung mit kaskadenförmig in axialer Richtung angeordneten hintereinanderliegenden Dichtlippen,
- Figur 4: eine hülsenförmige Ausführungsform des druckbeaufschlagbaren Dichtelementes der erfindungsgemäss vorgeschlagenen Dichtungsanordnung,
- Figur 5: eine weitere Ausführungsform des druckbeaufschlagbaren Dichtelementes der erfindungsgemäss vorgeschlagenen Dichtungsanordnung mit dem Mantelflächenbereich in dickerer Wandstärke vorgeschaltetem Faltenbalg,
- Figur 6: das hülsenförmig ausgebildete druckbeaufschlagbare Dichtelement gemäss Figur 4 in am Absperrkopf montierter Position,
- Figur 7: die in den Figuren 1 bis 3 dargestellten Ausführungsvarianten des druckbeaufschlagbaren Dichtelementes der erfindungsgemäss vorgeschlagenen Dichtungsanordnung in am Absperrkopf aufgenommener, jedoch noch nicht druckbeaufschlagter Lage,
- Figur 8: eine weitere Ausführungsform des druckbeaufschlagbaren Dichtelementes der erfindungsgemäss vorgeschlagenen Dichtungsanordnung gemäss der Figuren 1 bis 3 am Absperrelement gespannten erfindungsgemässen Dichtelementes,
- Figur 9: einen Absperrkopf mit Anlenköffnung und konischem Kegel,
- Figur 10: eine Explosionszeichnung des in Figur 9 dargestellten Absperrkopfes,
- Figur 11: eine Darstellung des den Hohlraum des Absperrkopfes überdeckenden druckbeaufschlagbaren Dichtelementes,
- Figur 12: eine erste Ausführungsform des scharnierartig ausgelenkten druckbeaufschlagbaren Dichtelementes und
- Figur 13: eine Ausführungsform des druckbeaufschlagbaren Dichtelementes der erfindungsgemäss vorgeschlagenen Dichtungsanordnung mit dessen Aussenwandfläche zugeordneter Verstärkung,
- Figur 14: ein expandiertes, druckbeaufschlagtes Dichtelement, eingefahren in eine Durchmessererweiterung einer Rohrleitung.

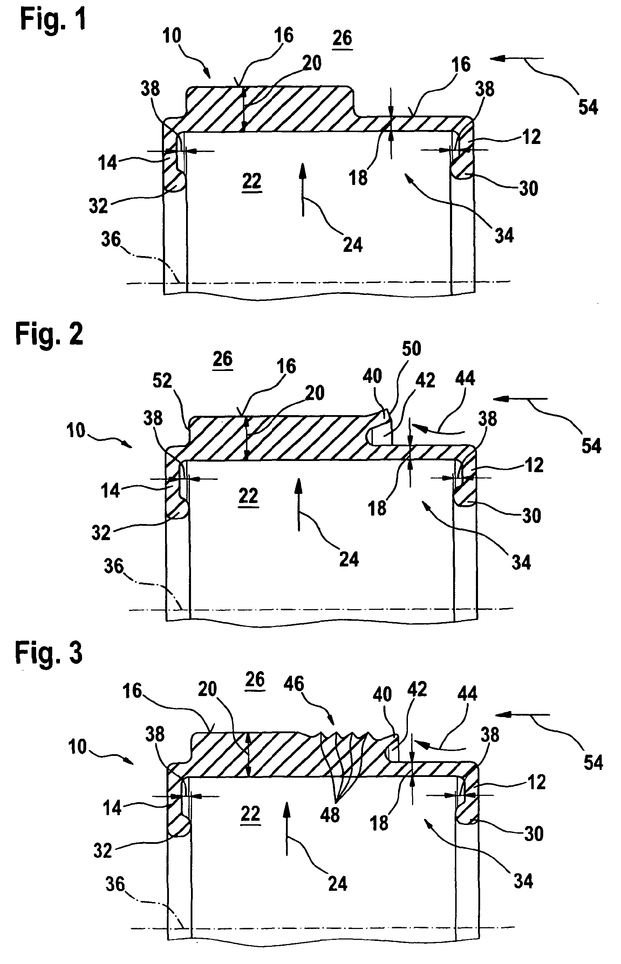

Der Darstellung in Figur 1 ist das druckbeaufschlagbare Dichtelement der erfindungsgemäss vorgeschlagenen Dichtungsanordnung in einer ersten Ausfuhrungsform zu entnehmen.

Wie Figur 1 zeigt, umfasst ein druckbeaufschlagbares Dichtelement 10 eine erste Stirnseite 12 sowie eine zweite Stirnseite 14. Zwischen diesen Stirnseiten 12, 14 verläuft eine Mantelfläche 16, die in einem axialen Bereich einer erste Wanddicke 18 und in einem weiteren, sich an den erstgenannten axialen Bereich anschliessenden Axialbereich in einer zweiten Wanddicke 20 ausgebildet ist. Die zweite Wanddicke 20 übersteigt die erste Wanddicke 18. Das druckbeaufschlagbare Dichtelement 10 gemäss Figur 1 umfasst einen Hohlraum 22, der zum Teil von den sich in radialer Richtung nach innen erstreckenden Stirnseiten 12, 14 begrenzt ist. Das druckbeaufschlagbare Dichtelement 10 ist in U-Form 34 ausgebildet und weist an den radial nach innen gerichteten Enden der ersten Stirnseite 12 bzw. der zweiten Stirnseite 14 eine erste wulstartige Verdickung 30 sowie eine weitere, zweite wulstartige Verdickung 32 auf. In der Darstellung gemäss Figur 1 ist das druckbeaufschlagbare Dichtelement 10 im nicht in eine Pipeline oder in ein Rohr montierten Zustand dargestellt und daher unverformt wiedergegeben. Mit Bezugszeichen 38 ist das Axialmass gekennzeichnet, um welches die jeweiligen wulstartigen Verdickungen 30, 32 an den innenliegenden Enden der Stirnseite 12 bzw. 14 über deren Innenseite hervortreten. Das druckbeaufschlagbare Dichtelement 10 ist symmetrisch zur Symmetrieachse 36 ausgeführt. Ein im Inneren herrschender Druck zur Verformung der Mantelfläche 16 ist durch pᵢ bezeichnet, während der abzudichtende Druck pₐ an der Aussenseite 26 des druckbeaufschlagbaren Dichtelements 10 herrscht. In der Darstellung gemäss Figur 1 ist die zweite Wanddicke 20 sowie die erste Wanddicke 18, die Mantelfläche 16 des druckbeaufschlagbaren Dichtelementes 10 dargestellt, wobei die zweite Wanddicke 20 die erste Wanddicke 18 um mindestens den Faktor 2 übersteigt.

Figur 2 zeigt eine weitere zweite Ausführungsform des druckbeaufschlagbaren Dichtelementes der erfindungsgemäss vorgeschlagenen Dichtungsanordnung.

Gemäss der Darstellung in Figur 2 befindet sich, in axiale Richtung der Mantelfläche 16 des druckbeaufschlagbaren Dichtelementes 10 gesehen, an der dem abzudichtenden Aussendruck pₐ zuweisenden Seite der Mantelfläche 16 in zweiter Wanddicke 20 eine umlaufende Dichtlippe 40. Die Dichtlippe 40 übergreift einen Freiraum 42. In diesem wirkt der die Mantelfläche 16 des druckbeaufschlagbaren Dichtelementes 10 von aussen beaufschlagende Aussendruck pₐ eine Aufweitungswirkung 44, so dass die in radialer Richtung verformbare umlaufende Dichtlippe 40 an den Innenumfang eines in Figur 1 nicht dargestellten Rohres angestellt werden kann und dieses abdichtet.

Darüber hinaus umfasst das in Figur 2 dargestellte druckbeaufschlagbare Dichtelement 10 die beiden Stirnseiten 12, 14, deren radial innenliegenden Enden, die beiden wulstartigen Verdickungen 30, 32 zur Fixierung des druckbeaufschlagbaren Dichtelementes 10 an einem Absperrkopf 76 (nicht dargestellt) dienen. Analog zur Darstellung gemäss Figur 1 stehen die wulstartigen Verdickungen 30, 32 an den Stirnseiten 12, 14 in axialer Richtung nach innen um einen Überstand 38 vor. Die Mantelfläche 16 umfasst analog zur Darstellung gemäss Figur 1 einen Mantelflächenbereich, der in der ersten Wanddicke 18 ausgeführt ist und einen solchen, der in der zweiten Wanddicke 20, die die erste Wanddicke 18 übersteigt, ausgebildet ist. In Bezug auf den Mantelflächenbereich der Mantelfläche 16, die in der zweiten Wanddicke 20 ausgeführt ist, weist dieser eine erste Kante 50, an der die umlaufende Dichtlippe 40 ausgebildet ist, sowie eine dieser gegenüberliegende, zweite Kante 52 auf.

Die im Wesentlichen in Bezug auf die Innenkontur des druckbeaufschlagbaren Dichtelementes 10 vorliegende U-Form ist durch Bezugszeichen 34 angedeutet.

Figur 3 stellt eine weitere, dritte Ausführungsform des druckbeaufschlagbaren Dichtelementes 10 der erfindungsgemäss vorgeschlagenen Dichtungsanordnung dar.

Wie Figur 3 zeigt, befindet sich in der Mantelfläche 16, insbesondere in dem in der zweiten Wanddicke 20 ausgebildeten Bereich neben der schon im Zusammenhang mit Figur 2 beschriebenen umlaufenden Dichtlippe 40 eine Kaskadendichtung 46. Die Kaskadendichtung 46 ist in axialer Richtung gesehen hinter der umlaufenden Dichtlippe 40 der Mantelfläche 16 ausgeführt und umfasst weitere Dichtlippen 48, die in axialer Richtung gesehen, hintereinanderliegend angeordnet sind.
Die umlaufende Dichtlippe 40, die nach wie vor vorliegt, überdeckt den Freiraum 42, der durch den nach wie vor an der Aussenseite 26 des druckbeaufschlagbaren Dichtelementes 10 entstehenden Aussendruck pₐ in Aufweitungsrichtung 44 ausgelenkt wird und dadurch die umlaufende Dichtlippe 40 von der Innenseite her an eine Innenwand 74 eines Rohres 70 oder einer Pipeline 70 anstellt.
Analog zu den Ausführungsvarianten gemäss der Figuren 1 und 2 befinden sich an den radial innenliegenden Enden der Stirnseiten 12 und 14 die wulstartigen Verdickungen 30, 32, die in Bezug auf die Innenseiten der Stirnseite 12, 14 jeweils um den Überstand 38 nach innen hervorstehen. Auch die in Figur 3 dargestellte Ausführungsform des druckbeaufschlagbaren Dichtelementes 10 der erfindungsgemäss vorgeschlagenen Dichtungsanordnung ist symmetrisch zur Symmetrieachse 36 aufgebaut und weist in Bezug auf dessen Innenkontur die U-Form 34 auf.

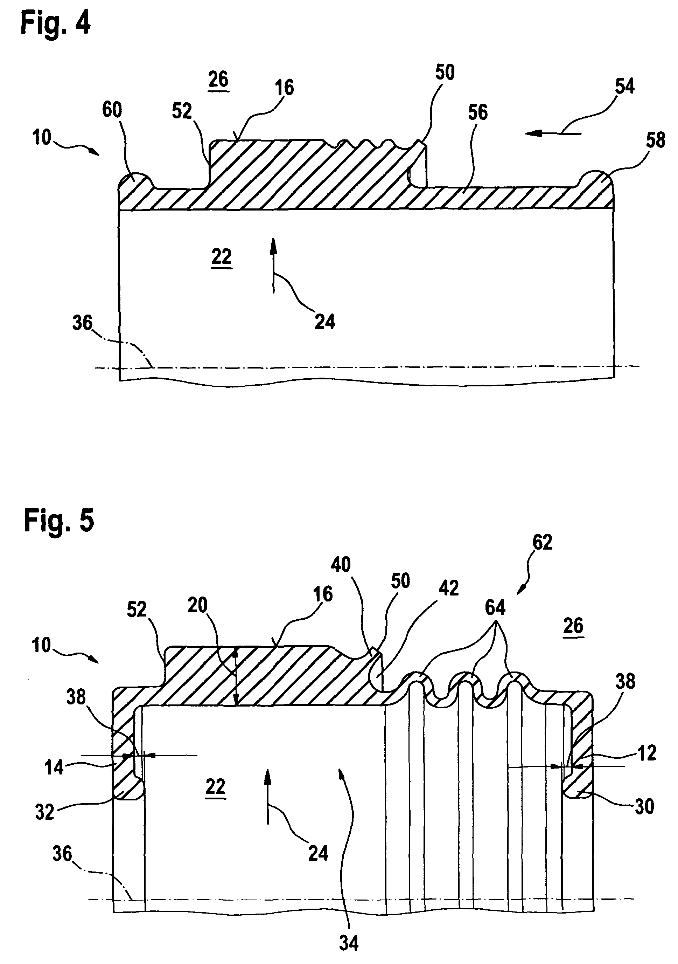

Figur 4 zeigt eine weitere, vierte hülsenförmig ausgebildete Ausführungsform des druckbeaufschlagbaren Dichtelementes der erfindungsgemäss vorgeschlagenen Dichtungsanordnung.

Im Vergleich zu den vorstehend in Zusammenhang mit den Figuren 1 bis 3 beschriebenen Ausführungsvarianten des druckbeaufschlagbaren Dichtelementes 10, fehlt es der in Figur 4 dargestellten Ausführungsform an den Stirnseiten 12, 14. Daher weist die vierte Ausführungsform des erfindungsgemäss vorgeschlagenen druckbeaufschlagbaren Dichtelementes 10 in der Mantelfläche ausgebildete Radialwülste 58, 60 auf. Die Mantelfläche 16 des in Hülsenform 56 ausgebildeten Dichtelementes 10 weist ebenfalls den in der zweiten Wanddicke 20 ausgebildeten Bereich auf, der durch die erste Kante 50 und die zweite Kante 52 begrenzt ist. Bezugszeichen 54 deutet die Strömungsrichtung des durch das druckbeaufschlagbare Dichtelementes 10 abzudichtenden Mediums an. In Bezug auf die in Figuren 1 bis 3 dargestellten Ausführungsformen ist das in Figur 4 dargestellte durckbeaufschlagbare Dichtelement 10 in axialer Richtung gesehen in einer grösseren Länge ausgeführt.

Figur 5 zeigt eine fünfte Ausführungsform des druckbeaufschlagbaren Dichtelementes 10.

Dieses umfasst analog zu den vorstehend in Bezug auf die Figuren 1 bis 3 beschriebenen Ausführungsformen die erste Stirnseite 12 und die zweite Stirnseite 14. An deren innenliegenden Enden befindet sich die erste wulstartige Verdickung 30 sowie die zweite wulstartige Verdickung 32, die um den Überstand 38 in Bezug auf die Innenwand der Stirnseite 12, 14 axial nach innen hervorstehen. Das druckbeaufschlagbare Dichtelement 10 gemäss Figur 5 ist symmetrisch zur Symmetrieachse 36 ausgebildet und umfasst den Hohlraum 22, der - im in Figur 5 nicht dargestellten - auf einem Absperrkopf montierten Zustand durch ein Medium beaufschlagt ist. Über die erste wulstartige Verdickung 30 bzw. die zweite wulstartige Verdickung 32 wird das druckbeaufschlagbare Dichtelement 10 am Mantel eines in Figur 5 nicht dargestellten Absperrkopfes 76 unter Zuhilfenahme von Spannringen fixiert.

Wie Figur 5 zeigt, befindet sich in Strömungsrichtung 54 des abzudichtenden Mediums gesehen, vor der ersten Kante 50 des druckbeaufschlagbaren Dichtelementes 10 ein Faltenbalg 62, der z.B. in Wellenform 64 ausgebildet ist. Der beispielsweise in Wellenform 64 ausgeführte Faltenbalg 62 wirkt bei Druckbeaufschlagung des Hohlraumes 22 mit einem Druckmedium, sei es flüssig, sei es gasförmig, als Stellglied, der bei seiner Verformung durch Druckbeaufschlagung den in grösserer Materialdicke (2. Wandstärke 20) ausgeformten Teil der Mantelfläche 16 scharnierartig radial nach aussen stellt. Diese Ausführungsvariante des druckbeaufschlagbaren Dichtelements 10 mit einem der Druck zugewandten Seite in der Mantelfläche 16 ausgeformten Faltenbalg 62 ermöglicht eine Mehrfachverwendung und damit einen signifikanten Kostenvorteil des druckbeaufschlagbaren Dichtelementes 10 der erfindungsgemäss vorgeschlagenen Dichtungsanordnung an Absperrköpfen 62, während die in den Figuren 1, 2, 3 und 4 dargestellten Ausführungsformen des druckbeaufschlagbaren Dichtelementes 10 der erfindungsgemäss vorgeschlagenen Dichtungsanordnung möglichst nur einmal verwendet werden sollten.

Analog zu den in Figur 1 bis 4 dargestellten Ausführungsvarianten ist die Mantelfläche 16 des druckbeaufschlagbaren Dichtelementes 10 gemäss der Ausführungsform in Figur 5 in der ersten Dicke 18 sowie in einer diese um zumindest den Faktor 2 übersteigenden zweiten Wanddicke 20 ausgeführt. Unterhalb der an der ersten Kante 50 der Mantelfläche 16 angeordneten umlaufenden Dichtlippe 40, befindet sich der Freiraum 42, der vom in Strömungsrichtung 54 strömenden, abzudichtenden Mediums mit Druck pₐ angeströmt wird, und die umlaufende Dichtlippe 40 bei Beaufschlagung des Hohlraums 22 des druckbeaufschlagbaren Dichtelementes 10 mit einem Innendruck pᵢ in radialer nach aussen verformt und an die Innenwand 74 anpresst.

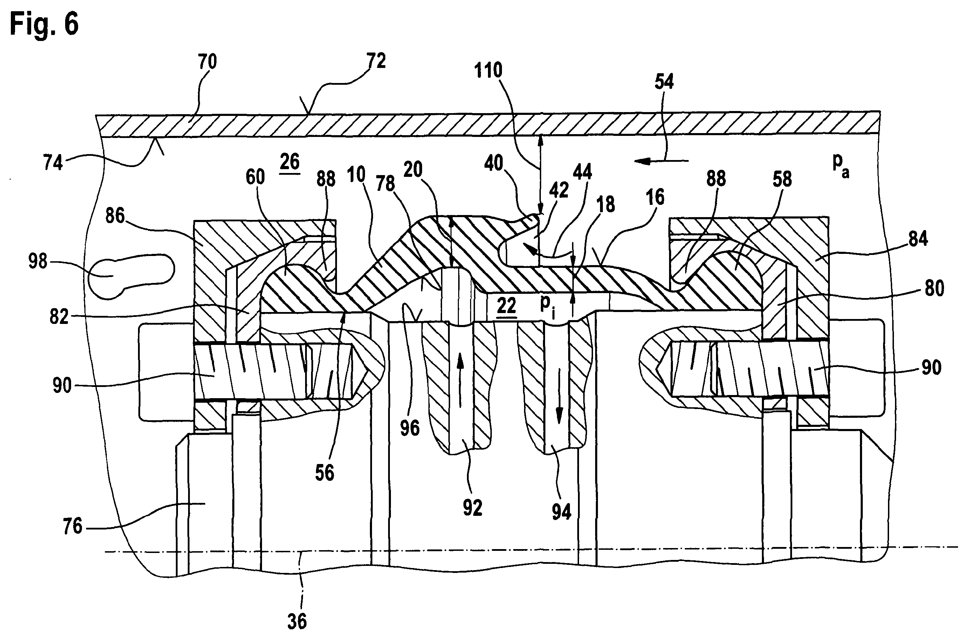

Figur 6 zeigt einen Absperrkopf, an dem das in Figur 4 dargestellte, in Hülsenform 56 ausgebildete, druckbeaufschlagbare Dichtelement montiert ist.

Wie der Darstellung gemäss Figur 6 zu entnehmen ist, ist der Absperrkopf 76 in ein Rohr bzw. eine Pipeline 70 eingeführt, deren Aussenwand mit Position 72 bezeichnet ist und deren Innenwand durch Bezugszeichen 74 gekennzeichnet ist. Die beiden Radialwülste 58, 60, die an den Enden der Mantelfläche 16 des druckbeaufschlagbaren Dichtelementes 10 ausgeführt sind, werden von ersten und zweiten Innenringen 80, 82 übergriffen, an denen Übergriffe 88 ausgeführt sind. Die Übergriffe 88 weisen bevorzugt eine gerundete Aussenkontur auf. Die Innenringe 80, 82 ihrerseits sind in der Ausführungsform gemäss Figur 6 von Aussenringen 84, 86 übergriffen. Sowohl die Innenringe 80, 82 als auch die diese umschliessenden Aussenringe 84, 86, werden über Schrauben 90 mit den Stirnseiten des Absperrkopfes 76 verschraubt und somit fixiert. Es besteht selbstverständlich die Möglichkeit, die in der Ausführungsform gemäss Figur 6 mehrteilig ausgebildete Fixierung der Radialwülste 58, 60 des druckbeaufschlagbaren Dichtelementes 10 in Hülsenform 56 auch mit einzelnen Ringen in radialer Richtung an der Mantelfläche des Absperrkopfes 76 zu fixieren.

Wie Figur 6 zeigt, befindet sich zwischen einer Mantelfläche 56 des Absperrkopfes 76 und einer Innenwand 78 des druckbeaufschlagbaren Dichtelementes 10 der Hohlraum 22. Der Hohlraum 22 wird über eine Druckbohrung 92 z.B. pneumatisch mit Druck beaufschlagt, so dass das druckbeaufschlagbare Dichtelement 10 bzw. dessen Mantelfläche 16 verformt wird. Durch die Verformung desselben legt sich dessen Aussenseite 26 unter Abdichtung des Spaltes 110 an die Innenwand 74 des Rohres 70 an und dichtet den im Strömungsquerschnitt des Rohres 70 anstehenden Aussendruck pₐ ab. Der Spalt 110 liegt im nicht-druckbeaufschlagten Zustand des druckbeaufschlagbaren Dichtelementes 10 in der Grössenordnung zwischen 15 und 35 mm, die durch die radiale Verformung, d.h. die Beaufschlagung des Hohlraumes 22 mit einem Druckmedium, problemlos auf Grund der Elastizität des Elastomermaterials des druckbeaufschlagbaren Dichtelementes 10 überbrückt werden kann. Durch die erfindungsgemäss vorgeschlagene Lösung können Drücke in der Grössenordnung von 8 bis 80 bar und mehr abgedichtet werden.

Zur Demontage des Absperrkopfes 76 wird zunächst der Hohlraum 22 zwischen dem Absperrkopf 76 und der Innenseite 78 des druckbeaufschlagbaren Dichtelementes 10 z.B. über eine Entlüftungsleitung entlüftet oder evakuiert. Diese ist in Figur 6 mit Position 94 bezeichnet. Danach erfolgt ein Ausschwenken des Absperrkopfes 76 beispielsweise durch Drehung desselben um eine Anlenköffnung 106, die im Material des Absperrkopfes 76 ausgebildet und in Figur 6 nicht dargestellt ist, so dass dieser aus einer Öffnung in der Wand des Rohres oder der Pipeline 70 herausgefahren werden kann, ohne dass das druckbeaufschlagbare Dichtelement 10 beschädigt würde. Dieses wird aus Sicherheitsgründen jedoch für jeden Anwendungsfall nach Gebrauch durch ein neues Dichtelement 10 ersetzt, welches ein Verschleissteil darstellt. Der Absperrkopf 76 hingegen kann durchaus mehrmals verwandt werden.

Figur 6 zeigt, dass auf Grund des in Strömungsrichtung 54 anstehenden Druckes pₐ die oberhalb des Freiraumes 42 angeordnete umlaufende Dichtlippe 40 aufgeweitet wird. Bevorzugt werden die Innenringe 80, 82 bzw. die Aussenringe 84, 86 im Falle einer mehrteiligen Ausführung, oder einteilig ausgebildete Spannringe über die Schrauben 90 fixiert, die wie in Figur 6 angedeutet, zur einfachen Montage auch einen Bajonettverschluss 98 umfassen können.

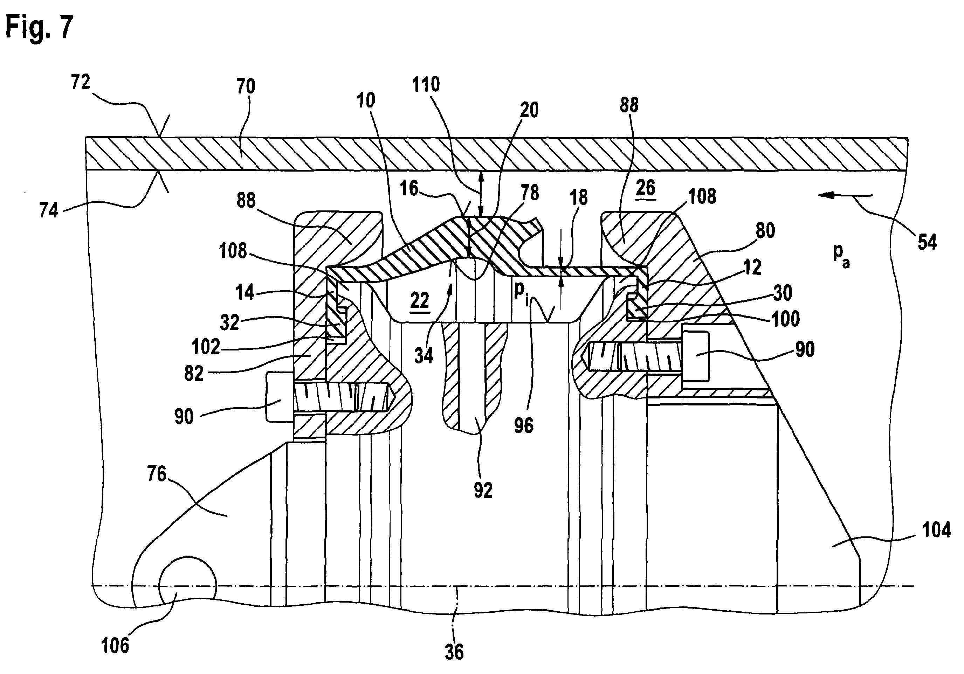

Figur 7 zeigt eine weitere Ausführungsform des druckbeaufschlagbaren Dichtelementes der erfindungsgemäss vorgeschlagenen Dichtungsanordnung im an einem Absperrkopf montierten Zustand.

Der Darstellung gemäss Figur 7 ist zu entnehmen, dass am Umfang des symmetrisch zur Symmetrieachse 36 aufgebauten Absperrkopfes 76 das druckbeaufschlagbare Dichtelement 10 der erfindungsgemäss vorgeschlagenen Dichtungsanordnung befestigt ist. In der in Figur 7 dargestellten Ausführungsvariante sind die an den ersten und zweiten Stirnseiten 12, 14 des druckbeaufschlagbaren Dichtelementes 10 ausgebildeten wulstartigen Verdickungen 30, 32 in korrespondierende nutförmige Vertiefungen 100 bzw. 102 eingelassen, die im Material des Absperrkopfes 76 an dessen Stirnseiten ausgeführt sind. Die Fixierung des druckbeaufschlagbaren Dichtelementes 10 der erfindungsgemäss vorgeschlagenen Dichtungsanordnung erfolgt über die in dieser Ausführungsform einteilig ausgebildeten Innenringe 80 bzw. 82. Wie Figur 7 zeigt, weist insbesondere der zweite Innenring 82 einen Übergriff 88 auf, um welchen der in der zweiten Wanddicke 20 ausgeführte Bereich der Mantelfläche 16 des druckbeaufschlagbaren Dichtelementes 10 scharnierartig ausgelenkt werden kann, sobald der Hohlraum 22 über die Druckbohrung 72 z.B. pneumatisch mit einem Druckmedium beaufschlagt wird. Der Innendruck pᵢ, der im Hohlraum 22 bei dessen Druckbeaufschlagung erzeugt wird, liegt in der Grössenordnung von etwa 16 bar, kann aber auch abhängig vom abzudichtenden Druck auf der Aussenseite pₐ erheblich darüber liegen.

Wie Figur 7 des Weiteren zeigt, ist der Absperrkopf 36 mit einer

Anlenköffnung 106 versehen. Mit dieser Öffnung 106 ist der Absperrkopf 76 in einem Führkopf befestigt, mit welchem der Absperrkopf 76 mit daran aufgenommenem druckbeaufschlagbaren Dichtelement 10 in den Strömungsquerschnitt der Pipeline 70 bzw. der Rohrleitung 70 eingeführt wird. Dies erfolgt in der Regel über ein Öffnen einer vorher geschaffenen Öffnung mit daran vorgesehenen Flanschen, an denen die Reparaturvorrichtung samt Absperrkopf 76 und Hydraulikzylinder angeflanscht wird, um die Reparatur bzw. Erweiterung oder dergleichen auszuführen.

Bei der Ausrichtung des Absperrkopfes 76 im Strömungsquerschnitt der Pipeline 70 bzw. der Rohrleitung 70 entsteht der durch Bezugszeichen 110 angedeutete sich in radialer Richtung erstreckender Spalt. Dieser Radialspalt 110 liegt je nach Dimensionierung des Absperrkopfes 76 in der Grössenordnung von 20 mm bis 30 mm. In einigen Fällen hat der Radialspalt 110 auch grössere Abmessungen.

Bei Beaufschlagung des Hohlraumes 22 mit dem Innendruck pᵢ, der durch die Innenwandung 78 der Mantelfläche 16 des druckbeaufschlagbaren Dichtelementes 10 einerseits und die Mantelfläche 96 des Absperrkopfes 76 andererseits begrenzt wird, erfolgt eine radiale Ausbuchtung der Mantelfläche 16 des druckbeaufschlagbaren Dichtelementes 10. Auf Grund des Umstandes, dass die Mantelfläche 16 auf der dem abzudichtenden Druck pₐ zugewandten Seite in der ersten Wanddicke 18 ausgebildet ist, oder in diesem Bereich, wie in Figur 5 angedeutet, den Faltenbalg 62, der als Stellglied dient, aufweist, erfolgt ein Auslenken der Mantelfläche 16 in dem Bereich, in dem diese in der zweiten Wanddicke 20 ausgeführt ist. Die Aussenseite 26 der Mantelfläche 16 legt sich demzufolge unter Überbrückung des Radialspaltes 110 an der Innenwand 74 der Pipeline 70 bzw. der Rohrleitung 70 an und dichtet diese ab. Unterstützt wird die Abdichtungswirkung darüber hinaus dadurch, dass der in Strömungsrichtung 54 des abzudichtenden Mediums wirkende abzudichtende Druck pₐ den Freiraum 42 unterhalb der mindestens einen umlaufenden Dichtlippe 40 beaufschlagt und die umlaufende Dichtlippe 40 dadurch unterstützend an die Innenwand 74 der Pipeline 70 bzw. der Rohrleitung 70 anstellt. Dadurch ist eine wirksame Abdichtung des abzudichtenden Druckes pₐ, der z.B. in einer Grössenordnung von etwa 10 bar und auch erheblich darüber liegen kann, in axialer und radialer Richtung gegeben. Ein scharnierartiges Auslenken der Mantelfläche 16 des druckbeaufschlagbaren Dichtelementes 10 wird dadurch unterstützt, dass sich dessen Aussenseite 26 um den gerundeten Übergriff 88 an diesen anschmiegend an die Innenwand 74 der Pipeline bzw. der Rohrleitung 40 entlang einer axialen Länge dichtend anstellt. Wie aus der Darstellung gemäss Figur 7 hervorgeht, befinden sich am Absperrkopf 76 ausgebildete Stützschultern 108 innerhalb des Hohlraumes 22 und stützen das druckbeaufschlagbare Dichtelement 10 im nicht-druckbeaufschlagten Zustand des Hohlraumes 72 an dessen Innenwandung 78 ab.

Figur 7 zeigt darüber hinaus, dass der Absperrkopf 76 die Anlenköffnung 106 an seiner rückwärtigen, d.h. dem abzudichtenden Druck pₐ abgewandten Seite, umfasst und andererseits einen Konus 104 aufweist, der dem abzudichtenden Druck pₐ im Strömungsquerschnitt der Pipeline bzw. der Rohrleitung 70 zugewandt ist.

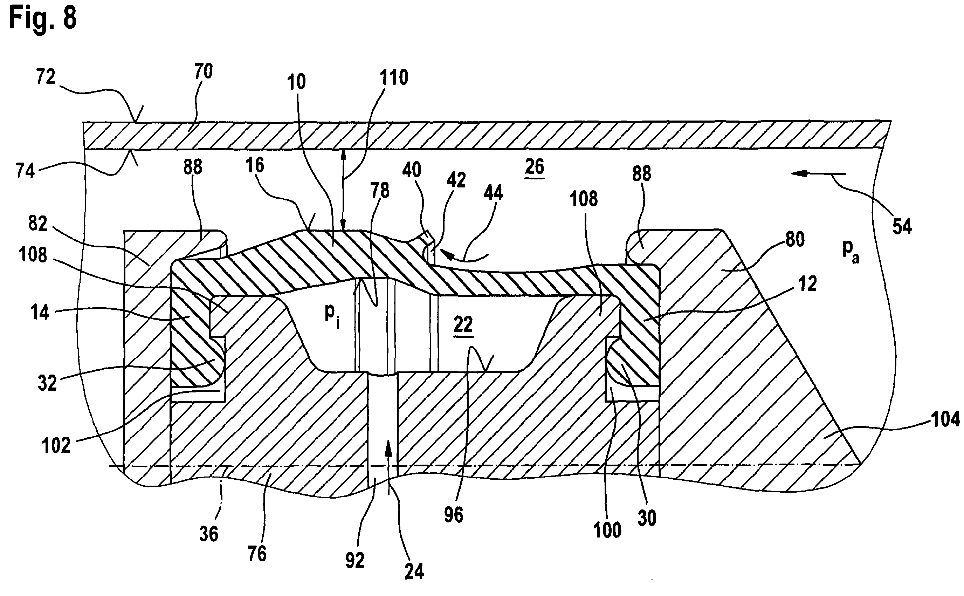

Der Darstellung gemäss Figur 8 ist ein am Absperrkopf montiertes druckbeaufschlagbares Dichtelement in einer weiteren Ausführungsform zu entnehmen.

Wie Figur 8 zeigt, sind analog zur Ausführungsform gemäss Figur 7 durch eine entsprechende Formgebung der Mantelfläche 76 des Absperrkopfes 76 innerhalb des Hohlraumes 22 Stützschultern 108 ausgebildet. Die Stützschultern 108 stützen im nicht-druckbeaufschlagten Zustand des Hohlraumes 22 bzw. der Druckbohrung 92 die Innenwand 78 des druckbeaufschlagbaren Dichtelementes 10 ab. An dessen Aussenseite 26 befindet sich die umlaufende Dichtlippe 40, unterhalb der der Freiraum 42 liegt. Durch die Wirkung des in der abzudichtenden Pipeline 70 bzw. der abzudichtenden Rohrleitung 70 herrschenden Druckes pₐ erfolgt eine Aufweitung 44 in Bezug auf die Dichtlippe 40, die im druckbeaufschlagten Zustand des Hohlraums 22 an der Innenwand 74 der Pipeline 70 bzw. der Rohrleitung 70 dichtend anliegt. Dabei ist der in Figur 8 dargestellte Spalt 110 überbrückt, so dass der Strömungsquerschnitt der Pipeline 70 bzw. der Rohrleitung 70 an dem dem Konus 104 abgewandten Ende des Absperrkopfes 76 axial und radial abgedichtet ist. Wie der Darstellung gemäss Figur 8 des Weiteren entnommen werden kann, handelt es sich bei dem druckbeaufschlagbaren Dichtelement 10 um ein solches, welches die erste Stirnseite 12 und die zweite Stirnseite 14 aufweist (vgl. Ausführungsvariante gemäss Figur 2). An der ersten Stirnseite 12 sowie der zweiten Stirnseite 14 befinden sich in radialer Richtung nach innen in Richtung auf die Symmetrieachse 36 verlaufend, die erste wulstartige Verdickung 30 bzw. die zweite wulstartige Verdickung 32. Diese sind formschlüssig in Aufnahmenuten 100 bzw. 102 eingelassen, in denen die wulstartigen Verdickungen 30 bzw. 32 durch die ersten und zweiten Spannringe 80, 82 fixiert sind. Zur definierten Vorgabe der Deformation der Mantelfläche 16 des druckbeaufschlagbaren Dichtelementes 10 ist der Übergriff 88 am zweiten Innenring 82 in Richtung auf die Aussenseite 26 der Mantelfläche 16 gerundet ausgeführt.

Der Bereich der Mantelfläche 16 des druckbeaufschlagbaren Dichtelementes 10, der in der ersten Wanddicke 18 ausgebildet ist, kann auch mit dem in den. Ausführungsvariante gemäss Figur 5 in der Mantelfläche 16 ausgebildeten Faltenbalg 62 versehen sein. Über diesen als Stellglied wirkenden Faltenbalg 62 wird bei Druckbeaufschlagung des Innenraumes 22 die Mantelfläche 16 innerhalb des in der zweiten Wanddicke 20 ausgeführten Bereiches um die gerundet ausgebildete Unterseite des Übergriffes 88 scharnierartig ausgelenkt, d.h. mit ihrer Aussenseite dichtend an die Innenwand 74 der Pipeline 70 bzw. der Rohrleitung 70 axial und radial abdichtend angestellt.

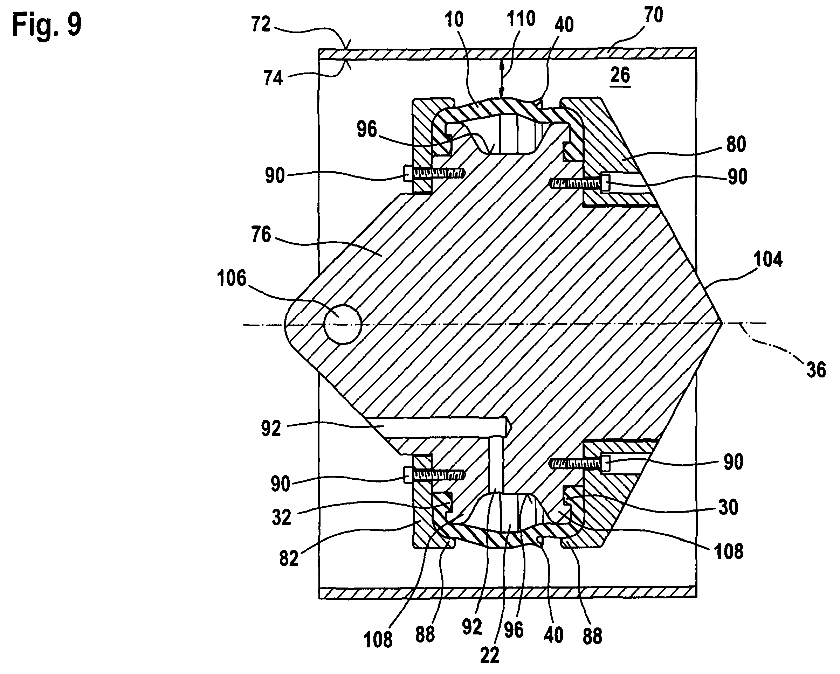

Figur 9 zeigt eine Ausführungsvariante des Absperrkopfes mit Anlenköffnung und Konus.

Figur 9 zeigt, dass in der Mantelfläche 96 des Hohlraumes 22 die Druckbohrung 92 mündet. Über diese wird der Hohlraum 22 mit einem Innendruck pᵢ beaufschlagt. Wie Figur 9 des Weiteren zeigt, ist das druckbeaufschlagbare Dichtelement 10 beidseitig durch die Innenringe 80, 82 am Absperrkopf 76 fixiert. Die Innenringe 80 bzw. 82 werden über die Schrauben 90, gegebenenfalls mittels eines Bajonettverschlusses 98 befestigt. Der Absperrkopf 76 ist bezüglich der Symmetrieachse 36 symmetrisch aufgebaut und weist den Radialspalt 110 auf, der sich zwischen der Aussenseite 26 des druckbeaufschlagbaren Dichtelementes 10 und der Innenwand 74 der Pipeline 70 bzw. der Rohrleitung 70 erstreckt. Deren Aussenseite ist mit Bezugszeichen 72 angedeutet. Wie Figur 9 des Weiteren zeigt, ist der Konus 104 des Absperrkopfes 76 dem abzudichtenden Druck pₐ zugewandt, während die Öffnung 106, mit welcher der Absperrkopf 76 ausgerichtet und geführt bzw. positioniert wird, an dem dem Konus 104 gegenüberliegenden Ende des Absperrkopfes 76 ausgeführt ist. In der Ausführung gemäss Figur 9 sind die Innenringe 80 bzw. 82 mit Übergriff 88 einteilig ausgeführt, im Gegensatz zur Ausführungsvariante gemäss Figur 6, bei der die Spannringe auch mehrteilig ausgeführt sein können. Figur 9 lässt sich des Weiteren entnehmen, dass innerhalb des Hohlraumes 22, bedingt durch die Formgebung der Mantelfläche 96 im Hohlraum Stützschultern 108 ausgebildet sind, die die Unterseite 78 des druckbeaufschlagbaren Dichtelementes 10 abstützen.

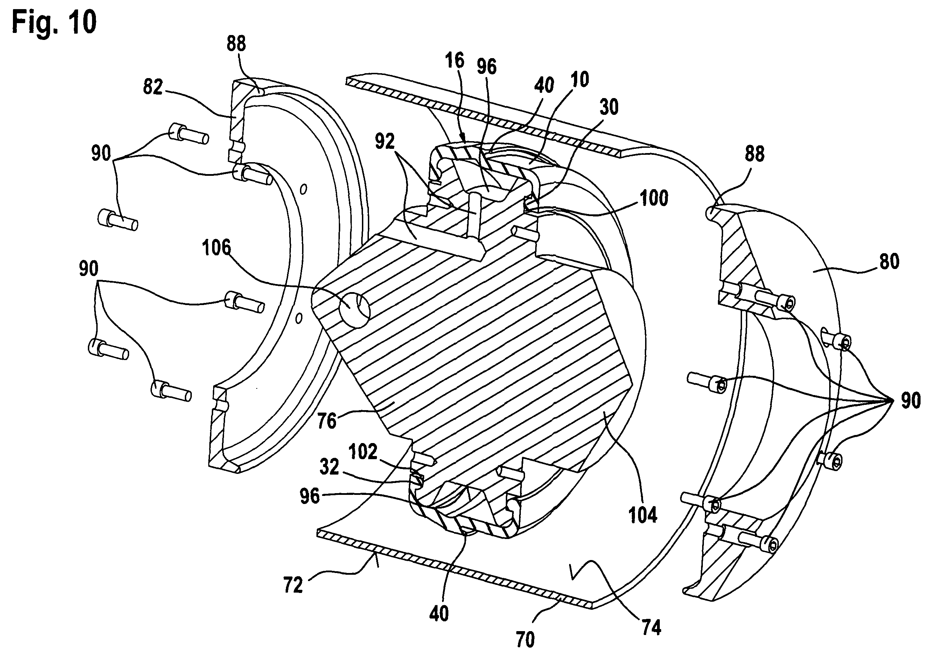

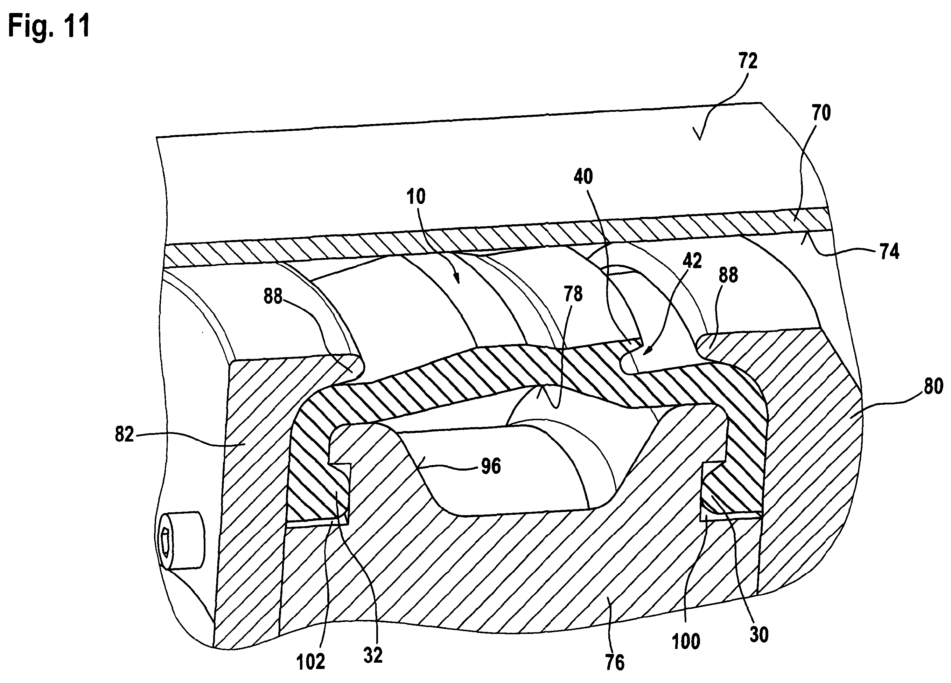

Die Figuren 10 und 11 zeigen eine Explosionsdarstellung bzw. eine perspektivische Ansicht in vergrössertem Massstab des druckbeaufschlagbaren Dichtelementes.

Figur 10 ist zu entnehmen, dass die scheibenförmig ausgebildeten, hier einteilig ausgebildeten Spannringe 80 bzw. 82 über die Schrauben 90 mit dem mit entsprechenden Sacklöchern mit Gewinde, die an den Stirnseiten des Absperrkopfes 76 ausgeführt sind, verschraubt werden. Wie der Explosionsdarstellung gemäss Figur 10 weiterhin entnommen werden kann, ist entlang des Aussenumfangs der Innenringe 80 bzw. 82 ein sich umlaufend in radialer Richtung erstreckender, an der Unterseite gerundeter Übergriff 88 ausgeführt. Dieser übergreift das druckbeaufschlagbare Dichtelement 10 im Randbereich. Dies ist in der Darstellung gemäss Figur 10 im Schnitt dargestellt und umfasst an seiner Mantelfläche 16 die umlaufend ausgebildete Dichtlippe 40. Das druckbeaufschlagbare Dichtelement 10 gemäss der Darstellung in den Figuren 10 und 11 umfasst die Stirnseiten 12 bzw. 14, an derem radial innenliegenden Ende jeweils wulstartige Verdickungen 30 bzw. 32 ausgebildet sind. Diese greifen in die Aufnahmenuten 100 bzw. 102, wie aus Figur 11 hervorgeht, ein und fixieren das druckbeaufschlagbare Dichtelement 10, nachdem dieses form- und kraftschlüssig durch die Montage der Innenringe 80 bzw. 82 am Absperrkopf 76 in seiner Montageposition in den Aufnahmenuten 100 bzw. 102 eingelassen ist. Der perspektivischen Schnittdarstellung gemäss Figur 10 ist überdies der Verlauf der Druckbohrung 92 zur Druckbeaufschlagung des Hohlraumes 22 mit einer Hydraulikflüssigkeit oder einem gasförmigen Medium zu entnehmen. Wie insbesondere die perspektivische Halbschnittdarstellung gemäss Figur 10 zeigt, füllt der Absperrkopf 76 im Wesentlichen den Strömungsquerschnitt der Pipeline 70 bzw. der Rohrleitung 70 aus. Lediglich am Rand der Aussenseite 26 des druckbeaufschlagbaren Dichtelementes 10, eingespannt zwischen die Innenringe 80 bzw. 82, verbleibt der Spalt 110, der bei Druckbeaufschlagung des Hohlraumes 22 durch Deformation bzw. Auslenkung des druckbeaufschlagbaren Dichtelementes 10 in radialer und axialer Richtung gegen den abzudichtenden Druck pₐ abgedichtet ist.

Figur 11 zeigt, dass die auf der dem abzudichtenden Druck pₐ zugewandten Seite des druckbeaufschlagbaren Dichtelementes 10 ausgeführte umlaufende Dichtlippe 40 den Freiraum 42 überdeckt. Der Freiraum 42 bewirkt in vorteilhafter Weise auf Grund des an diesem anstehenden abzudichtenden Druckes pₐ eine radiale Aufweitung 44, die auf die umlaufende Dichtlippe 40 wirkt, so dass deren Anstellung und damit deren Abdichtwirkung an der Innenwand 74 der Pipeline 70 bzw. der Rohrleitung 70 nochmals unterstützt ist.

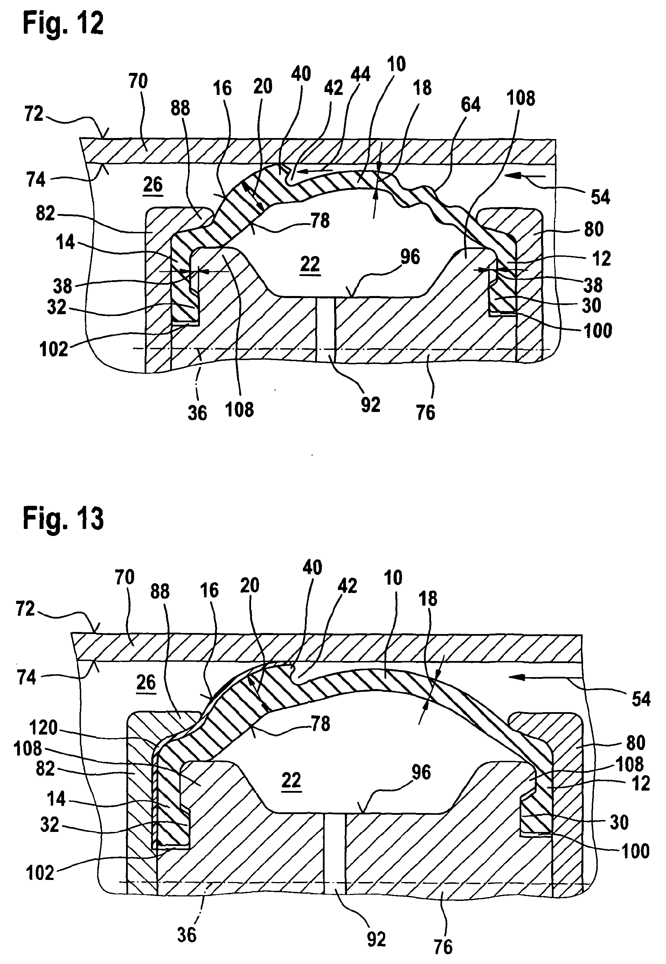

Die Figur 12 zeigt das druckbeaufschlagbare Dichtelement 10 der erfindungsgemäss vorgeschlagenen Dichtungsanordnung bei mit einem Innendruck pᵢ beaufschlagten Hohlraum. Figur 12 ist zu entnehmen, dass der im Hohlraum 22 wirkende Innendruck pᵢ, der z.B. in einer Grössenordnung bis 16 bar liegen kann, die Innenwandung 78 der Mantelfläche 16 des druckbeaufschlagbaren Dichtelementes 10 beaufschlagt und dieses mit seiner Aussenseite 26 demzufolge an die Innenwand 74 der Pipeline 70 bzw. der Rohrleitung 70 anstellt. Unterstützt durch den in Strömungsrichtung 74 wirkenden abzudichtenden Druck pₐ wird die umlaufende Dichtlippe 40 auf Grund des in Freiraum 42 an deren Unterseite angreifenden abzudichtenden Druckes pₐ unterstützt und an die Innenwand 74 der Pipeline 70 bzw. der Rohrleitung 70 angestellt.
Aus Figur 12 geht hervor, dass der Mantelflächenbereich der Mantelfläche 16, die in der zweiten Wanddicke 20 ausgeführt ist, mit seiner Aussenseite 26 scharnierartig um die gerundete Unterseite des Übergriffs 88 ausgelenkt ist. Das scharnierartige Hochschwenken des in der zweiten Wanddicke 20 ausgebildeten Bereiches der Mantelfläche 16 des druckbeaufschlagbaren Dichtelementes 10 wird dadurch unterstützt, dass die in der ersten Wanddicke 18 ausgebildete Mantelfläche 16 mit einem als Stellglied dienenden Faltenbalg 62 versehen ist. Dieser ist bevorzugt in Wellenform 64 ausgeführt und wirkt als Stellelement in Bezug auf das um den gerundeten Übergriff 88 erfolgende scharnierartige Aufstellen des Bereiches der Mantelfläche 16, die in der zweiten Wanddicke 20 ausgeführt ist. Eine prozesssichere Montage des druckbeaufschlagbaren Dichtelementes 10 ist dadurch gewährleistet, dass die statischen wulstartigen Verdickungen 30 bzw. 32 unterschiedlichen Durchmessern verlaufen und damit eine Montage des druckbeaufschlagbaren Dichtelementes 10 stets in der Position erlauben, in der die mindestens eine Dichtlippe 40 bzw. die Kaskadendichtung 46 an der Aussenseite 26 der Mantelfläche 16 dem abzudichtenden Druck pₐ zugewandt ist. Im druckbeaufschlagten Zustand des Hohlraumes 22 hebt sich die vom Innendruck pᵢ beaufschlagte Innenwand 74 von den in der Mantelfläche 96 des Absperrkörpers 76 ausgebildeten Stützschultern 108 ab. Die Abdichtung des Hohlraumes 22 wird durch die axiale Vorspannkraft der Innenringe 80 bzw. 82 in Bezug auf die erste und zweite Stirnseite 12 bzw. 14 des druckbeaufschlagten Dichtelementes 10 erzeugt. Bezugszeichen 38 bezeichnet einen Überstand, um den die wulstartigen Verdickungen 30 bzw. 32 jeweils über die Innenseite der ersten und zweiten Stirnseite 12 bzw. 14 des druckbeaufschlagbaren Dichtelementes in entsprechende Aufnahmenuten 100, 102 des Absperrkopfes 76 überstehen.

Figur 13 schliesslich zeigt eine Ausführungsform, die insbesondere für höchste Drücke geeignet ist. Wird der Hohlraum 22, der von der Mantelfläche 96 des Absperrkopfes 76 einerseits und der Innenwand 78 des druckbeaufschlagbaren Dichtelementes 10 begrenzt ist, mit Höchstdruck in der Grössenordnung von ≥ 80 bar beaufschlagt, so ist eine Verstärkung des scharnierartig ausgelenkten Bereiches der Mantelfläche 16 des druckbeaufschlagbaren Dichtelementes 10 erforderlich, die in der zweiten erhöhten Wanddicke 20 ausgebildet ist. Diese Verstärkung wird bevorzugt als Gewebearmierung 120 ausgeführt. Die Gewebearmierung 120 kann, wie in Figur 13 angedeutet, an der Aussenseite 26 der Mantelfläche 12 ausgebildet sein. Darüber hinaus kann die Gewebearmierung 120 in einer zeichnerisch nicht dargestellten Ausführungsvariante auch in das Material des druckbeaufschlagbaren Dichtelementes 10, d.h. in dessen Mantelfläche 16 im verformbaren Bereich einlaminiert oder einvulkanisiert sein. Bei der Gewebearmierung 120 kann es sich um eine einvulkanisierte Nomexschicht, um ein Aramid, um ein PTFE- (Teflon) Winkelband handeln; ferner kann auch ein Polyamidwinkelband oder ein Federstahlband oder ein geschlitztes Winkelblech oder dergleichen eingesetzt werden. Durch die Gewebearmierung 120 wird erreicht, dass das Elastomermaterial bzw. Kunststoffmaterial, auf dem das druckbeaufschlagbare Dichtelement 110 im Wege des Spritzgusses oder des Extruderverfahrens gefertigt wird, den Höchstinnendrücken pᵢ, die im Hohlraum 22 erzeugt werden können, mechanisch standhält. Beträgt der abzudichtende Druck z.B. etwa 80 bar, so ist eine radiale Aufweitung der Mantelfläche 16 des druckbeaufschlagbaren Dichtelementes 10 mit einem den aussen anliegenden Druck pₐ übersteigenden Innendruck pᵢ erforderlich. Nach erfolgter Abdichtung nimmt der Druck auf der dem abzudichtenden Druck abgewandten Seite der Rohrleitung 70 bzw. der Pipeline 70 bis auf Atmosphärendruck ab. Um bei Höchstdrücken eine auftretende Druckdifferenz von Δp in der Grössenordnung von 80 bar und mehr dauerhaft und prozesssicher abzudichten, ist die Verstärkung 120 z.B. in Gestalt einer Gewebearmierung oder anderer Alternativen möglich.

Der in Figur 13 dargestellte druckbeaufschlagte Zustand des Hohlraumes 22 führt, wie in Zusammenhang mit Figur 12 bereits erläutert, zur Anlage der umlaufenden Dichtung 40 auf Grund des im Freiraum 42 angreifenden abzudichtenden Druckes pₐ. Obgleich zeichnerisch nicht dargestellt, so kann in dem Bereich der Mantelfläche 16, die in der dünneren ersten Wanddicke 18 ausgebildet ist der in Figur 12 angedeutete Faltenbalg 62, der als Blähfeder, damit als Stellglied wirkt, ausgebildet sein. Zur scharnierartigen Auslenkung des Bereiches der Mantelfläche 16, die in der erhöhten zweiten Wanddicke 20 ausgebildet ist, kann die Mantelfläche 16 auch lediglich in der ersten dünneren Wanddicke 18 ausgeführt sein.

Wenn vorstehend in Zusammenhang mit der umlaufenden Dichtlippe 40 auf der dem abzudichtenden Druck pₐ zugewandten Seite der Mantelfläche 16 in der zweiten Wanddicke 20 gesprochen wird, so wird darunter im gleichen Sinne im vorliegenden Kontext die in den Figuren 3 und 4 dargestellte Ausführungsform des druckbeaufschlagbaren Dichtelementes der erfindungsgemäss vorgeschlagenen Dichtungsanordnung eingeschlossen, bei welchem eine Kaskadendichtung 46 auf der Aussenseite 26 der Mantelfläche 16 des druckbeaufschlagbaren Dichtelementes 10 ausgebildet ist, bei der mehrere Dichtlippen 48 in axialer Richtung hintereinanderliegend ausgebildet sein können.

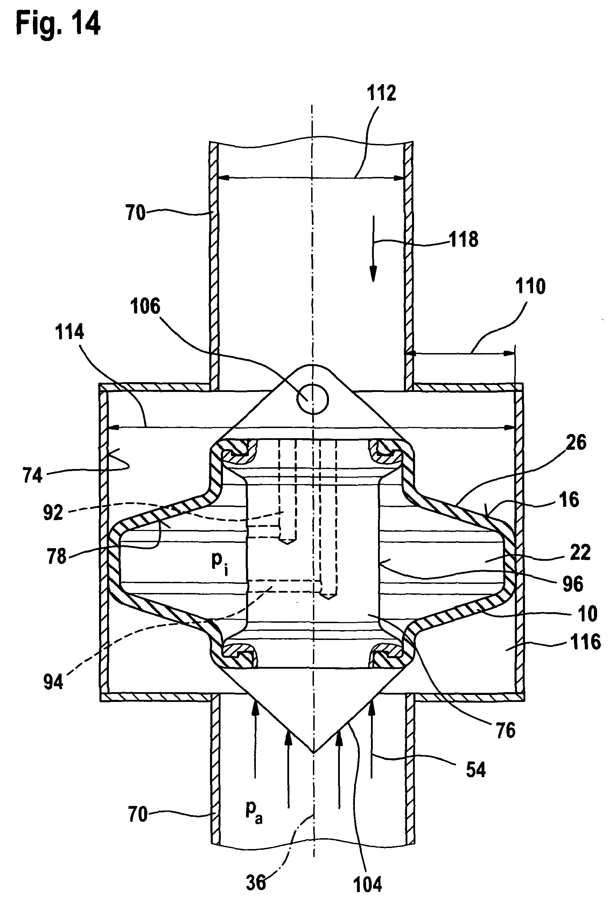

Figur 14 zeigt, dass das druckbeaufschlagbare Dichtelement 10 der erfindungsgemäss vorgeschlagenen Dichtungsanordnung auch zur Abdichtung einer kammerartigen Erweiterung (vgl. Position 116) eingesetzt werden kann.

Wie Figur 14 zeigt, wird im nicht druckbeaufschlagten Zustand des Hohlraumes 22 der Absperrkopf 76 in durch Bezugszeichen 118 angedeutete Einfahrrichtung z.B. in vertikale Richtung in eine Pipeline oder eine Rohrleitung 70 eingeführt. Diese umfasst einen Abschnitt, der in einem ersten Durchmesser 112 aufgenommen ist. An diesem Abschnitt befindet sich in Einfahrrichtung 118 gesehen, ein zweiter Abschnitt, in dem die Pipeline bzw. die Rohrleitung 70 einen zweiten Durchmesser 114 aufweist, der den ersten Durchmesser 112 erheblich, so zumindest um einen Radialspalt 110, übersteigt.

Wird der Absperrkopf 76 in diesen Bereich, d.h. den Bereich der Pipeline bzw. der Rohrleitung 70, der im zweiten Durchmesser 114 ausgeführt ist, eingeführt, so kann auch dieser zweite Durchmesser 114 auf Grund der enormen Deformationsfähigkeit des druckbeaufschlagbaren Dichtelementes 10 abgedichtet werden, wie in Figur 14 angedeutet. In Einfahrrichtung 118 wird der Absperrkopf 76 mit nicht druckbeaufschlagtem Hohlraum 22 in die Rohrleitung bzw. die Pipeline 70 eingeführt. Sobald der Absperrkopf 76 den Bereich der Rohrleitung 70 bzw. der Pipeline 70 erreicht hat, in dem der zweite Durchmesser 114 vorliegt, kann über die Druckbohrung 92 ein Druckmedium, sei es flüssig, sei es gasförmig, in den Hohlraum 22 eingebracht werden und die Mantelfläche 16 des druckbeaufschlagbaren Dichtelementes fixiert werden. Je nach Druckbeaufschlagung des Hohlraumes 22 kann der Radialspalt 110 innerhalb der Kammer 116 vollständig überbrückt werden, d.h. eine Abdichtung erzielt werden; es ist jedoch auch möglich, durch eine gezielte Druckbeaufschlagung des Hohlraumes 22 einen verbleibenden Radialspalt 110 zwischen der Aussenseite 26 der deformierbaren Mantelfläche 16 und der Innenwand 74 der Pipeline bzw. der Rohrleitung 70 innerhalb der Kammer 116 zuzulassen. Durch diese definierte Druckbeaufschlagung des Hohlraumes 22 kann ein Volumenstrom in Strömungsrichtung 54 durch die kammerartige Erweiterung 116, die im zweiten Durchmesser 118 ausgeführt ist, zugelassen werden. Die Weite des bleibenden Radialspaltes 110 ist abhängig von dem Druck, mit dem der Hohlraum 22 des Absperrkopfes 76 durch die Druckbohrung 92 beaufschlagt wird und der Deformation der Mantelfläche 16 des druckbeaufschlagbaren Dichtelementes 10. Dieses kann z.B. den in Figur 5 dargestellten, als Stellglied fungierenden Faltenbalg 62 in Wellenform 64 aufweisen; darüber hinaus ist es auch möglich, in dem dem abzudichtenden Druck pₐ zuweisenden Bereich der Mantelfläche 16 eine erste Materialstärke 18 vorzusehen, welche in Bezug auf die verbleibende zweite Wandstärke 20 der Mantelfläche 16 als Stellglied funktioniert und diese scharnierartig radial nach aussen an die abzudichtende Innenwand 74 anstellt. Müssen besonders hohe Drücke zuverlässig und prozesssicher abgedichtet werden, so kann es sinnvoll sein, bei starken Druckdifferenzen Δp vor und hinter dem druckbeaufschlagbaren Dichtelement 10 eine Verstärkung bzw. Gewebearmierung 120 vorzusehen, die die hohe anstehende Druckdifferenz beispielsweise zwischen einem abzudichtenden Druck pₐ in der Grössenordnung von 80 bar und dem Atmosphärendruck p abdichtet.

Das druckbeaufschlagbare Dichtelement 10 der erfindungsgemäss vorgeschlagenen Dichtungsanordnung kann z.B. an Absperrköpfen 76 im Wege des Hot-Tapping-Verfahrens eingesetzt werden, bei dem Öl oder Gas führende Pipelines 70 repariert werden. Des Weiteren kann das druckbeaufschlagbare Dichtelement 10 der erfindungsgemäss vorgeschlagenen Dichtungsanordnung an Absperrköpfen 76 oder dergleichen eingesetzt werden, oder zur Abdichtung von Wasserleitungen in der Grössenordnung von 16 Zoll Innendurchmesser und mehr eingesetzt werden. Je nach Druckbeaufschlagung des Hohlraumes 22 kann der Radialspalt 110 zwischen der Aussenseite 26 der Mantelfläche 16 und der Innenwand 74 der abzudichtenden Rohrleitung 70 oder Pipeline 70 vollständig überbrückt werden oder kann ein einen Volumenstrom erlaubender Restradialspalt 110 zugelassen werden, durch den weiterhin Medium strömt. Dies kann z.B. zu Dosierzwecken erwünscht sein um einen Restvolumenstrom durch den Strömungsquerschnitt strömen zu lassen.

Des Weiteren kann das druckbeaufschlagbare Dichtelement 10 der erfindungsgemäss vorgeschlagenen Dichtungsanordnung im Behälter- oder im Kesselbau eingesetzt werden, bei dem neben dem kompletten Abdichten von in den Behälter bzw. den Kessel mündenden Rohrleitungen eingesetzt werden, sowie auch zur definierten Verengung des Strömungsquerschnittes einer solchen Rohrleitung. Dadurch kann der dem verbleibenden freien Strömungsquerschnitt entsprechend der Druckbeaufschlagung des Dichtelementes 10 verbleibende Restspalt zur Dosierung eines Volumenstromes ausgenutzt werden.

Daneben kann das druckbeaufschlagbare Dichtelement 10 der erfindungsgemäss vorgeschlagenen Dichtungsanordnung aufgenommen an einem Absperrkopf 26, auch zur Abdichtung von Bohrlöchern oder dergleichen bei Upstream-Anwendungen eingesetzt werden. Unter Upstream-Anwendungen werden die Anwendungen bezeichnet, die bei der Förderung von Öl oder Gas dieses bis zu Erreichen der Erdoberfläche zurücklegt, z.B. wie dies bei Explorationsbohrungen oder beim Niederbringen, Abtäufen von Förderbohrungen der Fall ist. Des Weiteren kann das druckbeaufschlagbare Dichtelement 10 der erfindungsgemäss vorgeschlagenen Dichtungsanordnung bei Applikationen eingesetzt werden, in welchen die Rohrleitung 70 bzw. die Pipeline 70 einen Durchmessersprung von einem ersten Durchmesser 112 zu einem zweiten Durchmesser 114 aufweist, wie in Figur 14 angedeutet. Im nicht druckbeaufschlagten Zustand des Hohlraumes 22 wird der Absperrkopf 76 samt an diesem aufgenommenen druckbeaufschlagbaren Dichtelement 10 durch den engeren Querschnitt eingeführt und durch Druckbeaufschlagung des Hohlraumes 22 bzw. 92 in einer kammerartig ausgebildeten Erweiterung 116 radial verformt, so dass dort entweder eine Komplettabdichtung gegen den anstehenden Aussendruck pₐ oder ein definierter verbleibender Radialspalt erzeugt werden kann.

Das druckbeaufschlagbare Dichtelement 10 der erfindungsgemäss vorgeschlagenen Dichtungsanordnung kann bei entsprechend kleinerer Dimensionierung desselben auch zur Abdichtung von Türen und Fenstern eingesetzt werden. Dazu kann das druckbeaufschlagbare Dichtelement 10 entweder auf der Aussenseite des Profils des schwenkbaren Fensters oder der offenbaren Tür oder alternativ in den feststehenden Fensterrahmen oder die feststehende Türzarge integriert sein. Vorteilhafterweise kann beim Schliessen der Tür, ausgelöst durch den auftretenden Schliessdruck des Türblattes bzw. des Fensterflügels, das druckbeaufschlagbare Dichtelement 10 pneumatisch beaufschlagt werden. Beim Öffnen der Türe wird der beim Schliessen aufgebaute Druck im Hohlraum des druckbeaufschlagbaren Dichtelementes 10 automatisch wieder abgelassen. Gleiches gilt für Fenster, die vollumfänglich entlang ihrer vier Seiten mit dem druckbeaufschlagbaren Dichtelement 10 versehen sein können, während bei Türen das druckbeaufschlagbare Dichtelement 10 bevorzugt in die fussbodenseitige Kante eingelassen ist. Die Druckbeaufschlagung des druckbeaufschlagbaren Dichtelementes 10 erfolgt bei diesen Anwendungen bevorzugt über eine in den Türzargen bzw. den Fensterrahmen integrierte Luftpumpe, die gleichzeitig eine Dämpfungswirkung auf das in dem umlaufend ausgebildeten druckbeaufschlagbaren Dichtelement 10 eingeschlossene Luftvolumen ausübt.

**Bezugszeichenliste**

| | | | |
|---|---|---|---|
| 10 | Druckbeaufschlagbares Dichtelement | 70 | Pipeline, Rohrleitung |
| 12 | 1. Stirnseite | 72 | Außenwand |
| 14 | 2. Stirnseite | 74 | Innenwand |
| 16 | Mantelfläche | 76 | Absperrkopf (Stopfen) |
| 18 | 1. Wanddicke | 78 | Innenwandung Dichtelement |
| 20 | 2. Wanddicke | 80 | 1. Innenring |
| 22 | Hohlraum | 82 | 2. Innenring |
| 24 | Innendruck pi | 84 | 1. Außenring |
| 26 | Außenseite | 86 | 2. Außenring |
| 28 | abzudichtender Druck pa | 88 | Gerundeter Übergriff |
| 30 | erste wulstartige Verdickung | 90 | Schraube |
| 32 | Zweite wulstartige Verdickung | 92 | Druckbohrung |
| 34 | U-Form | 94 | Entlüftungs-/Vakuumbohrung |
| 36 | Symmetrieachse | 96 | Mantelfläche Absperrkopf |
| 38 | Überstand | 98 | Bajonettverschluss |
| 40 | Umlaufende Dichtlippe | 100 | 1. Aufnahmenut |
| 42 | Freiraum | 102 | 2. Aufnahmenut |
| 44 | Aufweitungswirkung | 104 | Konus |
| 46 | Kaskadendichtung | 106 | Anlenköffnung |
| 48 | Weitere Dichtlippen | 108 | Stützschulter |
| 50 | 1. Kante | 110 | Radialspalt |
| 52 | 2. Kante | 112 | 1. Durchmesser von 70 |
| 54 | Strömungsrichtung abzudichtendes Medium | 114 | 2. Durchmesser von 70 |
| 56 | Hülsenform | 116 | Kammerartige Erweiterung |
| 58 | 1. Radialwulst | 118 | Einfahrrichtung |
| 60 | 2. Radialwulst | 120 | Gewebearmierung |
| 62 | Faltenbalg | | |
| 64 | Wellenform | | |

## Patentansprüche

1. Dichtungsanordnung (10, 76) bestehend aus einem Dichtelement (10) und einem Absperrkopf (76), wobei das Dichtelement (10) an dem Absperrkopf (76) aufgenommen ist, zum Absperren oder Verengen eines Strömungsquerschnittes einer Pipeline (70) oder einer Rohrleitung (70), wobei das Dichtelement (10) am Absperrkopf (76) mindestens einen druckbeaufschlagten Hohlraum (22, 92) begrenzt, wobei dieses einen in einer dickeren Wandstärke (20) ausgeführten Abschnitt einer Mantelfläche (16) aufweist, **dadurch gekennzeichnet, dass** dieser Abschnitt der Mantelfläche (16) um eine Befestigungsstelle (80, 82) des druckbeaufschlagbaren Dichtelementes (10) scharnierartig radial auslenkbar ist und eine Innenwand (74) der Pipeline oder der Rohrleitung (70) mit der Mantelfläche (16, 40, 46, 48) bei Druckbeaufschlagung pᵢ des Hohlraumes (22, 92) abdichtbar ist.

2. Dichtungsanordnung (10, 76) gemäss Anspruch 1, **dadurch gekennzeichnet, dass** das Dichtelement (10) dazu ausgebildet ist, im druckbeaufschlagten Zustand des mindestens einen Hohlraumes (22, 92) einen Radialspalt (1 10) zwischen der Mantelfläche (16) und der Innenwand (74) der Pipeline (70) oder der Rohrleitung (70) radial und axial abzudichten.

3. Dichtungsanordnung (10, 76) gemäss Anspruch 1, **dadurch gekennzeichnet, dass** das Dichtelement (10) in seiner Mantelfläche (16) einen als Stellglied dienenden Faltenbalg (62, 64), oder einen in einer ersten Wanddicke (18) ausgeführten Abschnitt aufweist.

4. Dichtungsanordnung (10, 76) gemäss Anspruch 3, **dadurch gekennzeichnet, dass** der Faltenbalg (62) in der Mantelfläche (16) des Dichtelementes (10) in einem dem abzudichtenden Druck pa zuweisenden Bereich liegt und als Stellglied dient.

5. Dichtungsanordnung (10, 76) gemäss Anspruch 1, **dadurch gekennzeichnet, dass** das Dichtelement (10) wulstartige Verdickungen (30, 32; 58, 60) zur beidseitigen axialen Fixierung des Dichtelementes (10) am Absperrkopf (76) aufweist.

6. Dichtungsanordnung (10, 76) gemäss Anspruch 5, **dadurch gekennzeichnet, dass**
die wulstartigen Verdickungen (30, 32) an einer ersten Stirnseite (12) und an einer zweiten Stirnseite (14) des Dichtelementes (10) ausgeführt sind.

7. Dichtungsanordnung (10, 76) gemäss Anspruch 5, **dadurch gekennzeichnet, dass**
die wulstartigen Verdickungen (58, 60) in der Mantelfläche (16) eines in Hülsenform (56) ausgebildeten Dichtelementes (10) ausgebildet sind.

8. Dichtungsanordnung (10, 76) gemäss Anspruch 5, **dadurch gekennzeichnet, dass**
die wulstartigen Verdickungen (30, 32; 58, 60) in der Mantelfläche (16) von ein oder mehrteilig ausgebildeten Spannringen (80, 82, 84, 86; 88) übergriffen sind.

9. Dichtungsanordnung (10, 76) gemäss Anspruch 1, **dadurch gekennzeichnet, dass** die Mantelfläche (16) einen Bereich mit einer ersten Wanddicke (18) und einen Bereich mit einer zweiten Wanddicke (20) aufweist, wobei die Innenwand (74) der Pipeline (70) oder der Rohrleitung (70) mit dem Bereich, der in der zweiten Wanddicke (20) ausgeführt ist, bei druckbeaufschlagtem mindestens einen Hohlraum (22, 92) abdichtbar ist.

10. Dichtungsanordnung (10, 76) gemäss Anspruch 9, **dadurch gekennzeichnet, dass**
der in der zweiten Wanddicke (20) ausgeführte Bereich der Mantelfläche (16) mindestens eine umlaufende Dichtlippe (40) aufweist, die einen Freiraum (42) überdeckt.

11. Dichtungsanordnung (10, 76) gemäss Anspruch 1, **dadurch gekennzeichnet, dass** bei Demontage des Absperrkopfes (16) der mindestens eine Hohlraum (22) über eine Öffnung (94) entlüftet oder mit Unterdruck beaufschlagt ist.

12. Dichtungsanordnung (10, 76) gemäss Anspruch 8, **dadurch gekennzeichnet, dass**
die ein oder mehrteilig ausgebildeten Spannringe (80, 82; 84, 86) durch Bajonettverschlüsse (98, 90) an Stirnseiten des Absperrkopfes (76) aufgenommen sind.

13. Dichtungsanordnung (10, 76) gemäss Anspruch 1, **dadurch gekennzeichnet, dass** das Dichtelement (10) an seiner Innenseite (78) durch Stützschultern (108), die in der Mantelfläche (96) des Absperrkopfes (76) ausgebildet sind, abgestützt ist.

14. Dichtungsanordnung (10, 76) gemäss Anspruch 9, **dadurch gekennzeichnet, dass**
der in der zweiten Wanddicke (20) ausgebildete Bereich der Mantelfläche (16) mit einer Gewebearmierung (120) versehen ist.

15. Dichtungsanordnung (10, 76) gemäss Anspruch 14, **dadurch gekennzeichnet, dass**
die Gewebearmierung (120) in die Mantelfläche (16) eingelassen ist oder sich auf der Aussenseite (26) der Mantelfläche (16) des druckbeaufschlagbaren Dichtelementes (10) zur druckabgewandten Seite erstreckt.

16. Dichtungsanordnung (10, 76) gemäss Anspruch 14, **dadurch gekennzeichnet, dass**
die Gewebearmierung (120) als PTFE-Winkelband, als einvulkanisierte Nomexschicht, als Aramidschicht, als Polyamidwinkelband, als Federstahlband, als Kevlarschicht oder als geschlitztes Winkelblech ausgeführt ist.

17. Dichtungsanordnung (10, 76) gemäss Anspruch 7, **dadurch gekennzeichnet, dass**
die wulstartigen Verdickungen (30, 32) an den Stirnseiten (12, 14) in Bezug auf die Symmetrieachse (36) des druckbeaufschlagbaren Dichtelementes (10) in voneinander verschiedenen Durchmessern verlaufen und eine Montage des druckbeaufschlagbaren Dichtelementes (10) derart gewährleisten, dass dessen mindestens eine umlaufende Dichtlippe (40) stets dem abzudichtenden Druck pa zuweist.

18. Verwendung der druckbeaufschlagbaren Dichtungsanordnung (10, 76) gemäss
einem oder mehrerer der vorhergehenden Ansprüche, zur Abdichtung von Medien führenden Leitungen wie z.B. Ölpipelines (70) oder Gaspipelines (70).

19. Verwendung der druckbeaufschlagbaren Dichtungsanordnung (10, 76)
gemäss
einem oder mehrerer der Ansprüche 1 bis 17 zur Abdichtung einer Förderöffnung für Öl oder Gas im Upstream-Bereich der Öloder Gasförderung.

20. Verwendung der druckbeaufschlagbaren Dichtungsanordnung (10, 76) gemäss
einem oder mehrerer der Ansprüche 1 bis 17 zur Abdichtung von H2O-führenden Leitungen (70) oder zur Einstellung eines verbleibenden Strömungsquerschnittes.

21. Verwendung der druckbeaufschlagbaren Dichtungsanordnung (10, 76) gemäss
einem oder mehrerer der Ansprüche 1 bis 17 zur Abdichtung von Getränke und Lebensmittelflüssigkeiten führenden Rohrleitungen (70) und Ventilen zur Vermeidung von Keimbildungen in Toträumen und Ecken.

22. Verwendung der druckbeaufschlagbaren Dichtungsanordnung (10, 76) gemäss
einem oder mehrerer der Ansprüche 1 bis 17 im Behälterbau oder im Kesselbau zur Abdichtung von Rohrleitungen (70) oder zur Einstellung von verbleibenden Querschnitten innerhalb der Rohrleitungen (70) bei Abfüllanlagen von Flüssigkeiten jeglicher Art.

23. Verwendung der druckbeaufschlagbaren Dichtungsanordnung (10, 76) gemäss
einem oder mehrerer der Ansprüche 1 bis 17 im Behälterbau oder im Kesselbau zur verbesserten Abdichtung von Schüttgütern, von Flüssigkeitskristallen zur Herstellung von LCD-Bildschirmen und dergleichen.

24. Verwendung der druckbeaufschlagbaren Dichtungsanordnung (10, 76) gemäss
einem oder mehrerer der Ansprüche 1 bis 17 im Behälterbau oder im Kesselbau zur Regelung beim Abfüllen und Volumenmengendosierung von Schüttgütern, insbesondere zur Einstellung eines Förderspaltmasses in Abhängigkeit vom herrschenden Druckniveau.

25. Verwendung der druckbeaufschlagbaren Dichtungsanordnung (10, 76) gemäss
einem oder mehrerer der Ansprüche 1 bis 17 im zur Einstellung eines Dosierspaltes oder eines verbleibenden Strömungsquerschnittes in einer Rohrleitung (70).

26. Verwendung der druckbeaufschlagbaren Dichtungsanordnung (10, 76) gemäss
einem oder mehrerer der Ansprüche 1 bis 17 in einer Rohrleitung (70) oder einer Pipeline (70), zur Abdichtung einer kammerartigen Erweiterung (114, 1 16) oder zur Einstellung eines verbleibenden Spaltes in dieser.

27. Verwendung der druckbeaufschlagbaren Dichtungsanordnung (10, 76) gemäss
einem oder mehrerer der Ansprüche 1 bis 17 zur spielfreien Abdichtung von Türen und Fenstern sowie zur thermisch isolierenden Abdichtung.

28. Verwendung der druckbeaufschlagbaren Dichtungsanordnung (10, 76) gemäss
Anspruch 27 zur Druckbeaufschlagung mittels einer im Türmechanismus beim Öffnen und Schliessen integrierten Luftpumpe, die gleichzeitig als Dämpfungselement wirkt.

## Claims

1. Sealing assembly (10, 76) comprised of a sealing element (10) and a blocking head (76), wherein the sealing element (10) is incorporated on the blocking head (76), for blocking or constricting a flow cross-section of a pipeline (70) or a conduit (70), wherein the sealing element (10) on the blocking head (76) delimits at least one pressurized hollow volume (22, 92), wherein [the element] comprises a section of a shell surface (16) implemented with a thicker wall thickness (20),
**characterized in that** this section of the shell surface (16) is in the manner of an articulation, deflectable radially about a securement site (80, 82) of the pressurizable sealing element (10) and an inner wall (74) of the pipeline or the conduit (70) is sealable with the shell surface (16, 40, 46, 48) upon pressurization pᵢ of the hollow volume (22, 92).

2. Sealing assembly (10, 76) as in claim 1, **characterized in that** the sealing element (10) is implemented for the purpose of sealing radially and axially a radial gap (110) between the shell surface (16) and the inner wall (74) of the pipeline (70) or the conduit (70) in the pressurized state of the at least one hollow volume (22, 92).

3. Sealing assembly (10, 76) as in claim 1, **characterized in that** the sealing element (10) comprises in its shell surface (16) a bellows (62, 64) serving as a setting element or a section implemented in a first wall thickness (18).

4. Sealing assembly (10, 76) as in claim 3, **characterized in that** the bellows (62) in the shell surface (16) of the sealing element (10) is located in a region referring to the pressure pₐ to be sealed and serves as a setting element.

5. Sealing assembly (10, 76) as in claim 1, **characterized in that** the sealing element (10) comprises bead-like thickenings (30, 32; 58, 60) for axially fixing the sealing element (10) bilaterally on the blocking head (76).

6. Sealing assembly (10, 76) as in claim 5, **characterized in that** the bead-like thickenings (30, 32) are implemented on a first front face (12) and on a second front face (14) of the sealing element (10).

7. Sealing assembly (10, 76) as in claim 5, **characterized in that** the bead-like thickenings (58, 60) are implemented in the shell surface (16) of a sealing element (10) implemented in the form of a sleeve (56).

8. Sealing assembly (10, 76) as in claim 5, **characterized in that** the bead-like thickenings (30, 32; 58, 60) in the shell surface (16) are overlapped by clamp rings (80, 82, 84, 86; 88) implemented unitarially or in several parts.

9. Sealing assembly (10, 76) as in claim 1, **characterized in that** the shell surface (16) comprises a region having a first wall thickness (18) and a region having a second wall thickness (20), wherein the inner wall (74) of the pipeline (70) or of the conduit (70) is sealable with the region implemented in the second wall thickness (20) when at least one hollow volume (22, 92) is pressurized.

10. Sealing assembly (10, 76) as in claim 9, **characterized in that** the region of the shell surface (16) implemented in the second wall thickness (20) comprises at least one circumferential sealing lip (40) that overlaps an expansion space (42).

11. Sealing assembly (10, 76) as in claim 1, **characterized in that** with the blocking head (16) dismounted the at least one hollow volume (22) is vented or underpressure is generated in it via an opening (94).

12. Sealing assembly (10, 76) as in claim 8, **characterized in that** clamp rings (80, 82; 84, 86) implemented unitarially or in several parts are incorporated on the front faces of the blocking head (76) by bayonet fittings (98, 90).

13. Sealing assembly (10, 76) as in claim 1, **characterized in that** the sealing element (10) is supported on its inside (78) by support shoulders (108) implemented in the shell surface (96) of the blocking head (76).

14. Sealing assembly (10, 76) as in claim 9, **characterized in that** the region of the shell surface (16) implemented in the second wall thickness (20) is provided with a fabric webbing reinforcement (120).

15. Sealing assembly (10, 76) as in claim 14, **characterized in that** the fabric webbing reinforcement (120) is embedded in the shell surface (16) or extends on the outside (26) of the shell surface (16) of the pressurizable sealing element (10) toward the side facing away from the pressure.

16. Sealing assembly (10, 76) as in claim 14, **characterized in that** the fabric webbing reinforcement (120) is implemented as PTFE angle tape, as a vulcanized-on nomex coating, as an aramid coating, as polyamide angle tape, spring steel strip, as Kevlar coating or as bifurcated angular sheet.

17. Sealing assembly (10, 76) as in claim 7, **characterized in that** the bead-like thickenings (30, 32) extend on the front faces (12, 14), with respect to the axis of symmetry (36) of the pressurizable sealing element (10), at diameters differing from one another and ensure the mounting of the pressurizable sealing element (10) such that its at least one circumferential sealing lip (40) is always directed toward the pressure pₐ to be sealed.

18. Use of the pressurizable sealing assembly (10, 76) as in one or several of the preceding claims for sealing conduits carrying fluid media, such as for example oil pipelines (70) or gas pipelines (70).

19. Use of the pressurizable sealing assembly (10, 76) as in one or several of claims 1 to 17 for sealing a delivery outlet for oil or gas in the upstream sector of oil or gas production.

20. Use of the pressurizable sealing assembly (10, 76) as in one or several of claims 1 to 17 for sealing conduits (70) carrying H₂O or for setting a continuing flow cross-section.

21. Use of the pressurizable sealing assembly (10, 76) as in one or several of claims 1 to 17 for sealing conduits (70) carrying beverages and nutritional liquids and valves, to prevent microbial formations in dead spaces and corners.

22. Use of the pressurizable sealing assembly (10, 76) as in one or several of claims 1 to 17 in container construction or in boiler construction for sealing pipelines (70) or for setting continuing cross-sections within the pipelines (70) in bottling plants of fluids of any type.

23. Use of the pressurizable sealing assembly (10, 76) as in one or several of claims 1 to 17 in container construction or in boiler construction for the improved sealing of bulk goods, of liquid crystals for the production of LCD screens and the like.

24. Use of the pressurizable sealing assembly (10, 76) as in one or several of claims 1 to 17 in container construction or in boiler construction for the regulation during bottling and filling and volume quantity dosing of bulk goods, in particular for setting a discharge gap dimension as a function of the obtaining pressure level.

25. Use of the pressurizable sealing assembly (10, 76) as in one or several of claims 1 to 17 in [*sic*] for setting a dosing gap or a continuing flow cross-section in a conduit (70).

26. Use of the pressurizable sealing assembly (10, 76) as in one or several of claims 1 to 17 in a conduit (70) or a pipeline (70) for sealing a chamber-like widening (114, 116) or for setting a continuing gap in it.

27. Use of the pressurizable sealing assembly (10, 76) as in one or several of claims 1 to 17 for the clearance-free sealing of doors and windows as well as for the thermally insulating sealing.

28. Use of the pressurizable sealing assembly (10, 76) as in claim 27 for pressurization by means of an air pump integrated in the door mechanism during opening and closing, which air pump serves simultaneously as a damping element.

## Revendications

1. Ensemble d'étanchéité (10, 76), se composant d'un élément d'étanchéité (10) et d'une tête d'arrêt (76), dans lequel l'élément d'étanchéité (10) est posé sur la tête d'arrêt (76), pour fermer ou rétrécir une section transversale d'écoulement d'un pipeline (70) ou d'une canalisation (70), dans lequel l'élément d'étanchéité (10) limite sur la tête d'arrêt (76) au moins une cavité soumise à la pression (22, 92), dans lequel celui-ci présente une partie d'une surface latérale (16) exécutée en une plus forte épaisseur de paroi (20), **caractérisé en ce que** cette partie de la surface latérale (16) peut pivoter radialement à la manière d'une charnière autour d'un point de fixation (80, 82) de l'élément d'étanchéité soumis à la pression (10) et une paroi intérieure (74) du pipeline ou de la canalisation (70) peut être rendue étanche avec la surface latérale (16, 40, 46, 48) lors de la mise sous pression pᵢ de la cavité (22, 92).

2. Ensemble d'étanchéité (10, 76) selon la revendication 1, **caractérisé en ce que** l'élément d'étanchéité (10) est réalisé de façon à obturer radialement et axialement, dans l'état d'exposition à la pression de ladite au moins une cavité (22, 92), une fente annulaire (110) entre la surface latérale (16) et la paroi intérieure (74) du pipeline (70) ou de la canalisation (70).

3. Ensemble d'étanchéité (10, 76) selon la revendication 1, **caractérisé en ce que** l'élément d'étanchéité (10) présente dans sa surface latérale (16) un soufflet plissé (62, 64) servant d'organe de réglage ou une partie exécutée en une première épaisseur de paroi (18).

4. Ensemble d'étanchéité (10, 76) selon la revendication 3, **caractérisé en ce que** le soufflet plissé (62) est situé dans la surface latérale (16) de l'élément d'étanchéité (10) dans une zone tournée vers la pression à retenir pₐ et sert d'organe de réglage.

5. Ensemble d'étanchéité (10, 76) selon la revendication 1, **caractérisé en ce que** l'élément d'étanchéité (10) présente des surépaisseurs de type bourrelet (30, 32; 58, 60) pour la fixation axiale bilatérale de l'élément d'étanchéité (10) sur la tête d'arrêt (76).

6. Ensemble d'étanchéité (10,76) selon la revendication 5, **caractérisé en ce que** les surépaisseurs de type bourrelet (30, 32) sont réalisées sur un premier côté frontal (12) et sur un deuxième côté frontal (14) de l'élément d'étanchéité (10).

7. Ensemble d'étanchéité (10, 76) selon la revendication 5, **caractérisé en ce que** les surépaisseurs de type bourrelet (58, 60) sont formées dans la surface latérale (16) d'un élément d'étanchéité (10) configuré sous forme de manchon (56).

8. Ensemble d'étanchéité (10, 76) selon la revendication 5, **caractérisé en ce que** les surépaisseurs de type bourrelet (30, 32; 58, 60) dans la surface latérale (16) sont recouvertes par des bagues de serrage (80, 82, 84, 86; 88) réalisées en une pièce ou en plusieurs pièces.

9. Ensemble d'étanchéité (10, 76) selon la revendication 1, **caractérisé en ce que** la surface latérale (16) présente une zone avec une première épaisseur de paroi (18) et une zone avec une deuxième épaisseur de paroi (20), dans lequel la paroi intérieure (74) du pipeline (70) ou de la canalisation (70) peut être rendue étanche avec la zone qui est réalisée dans la deuxième épaisseur de paroi (20), lorsque ladite au moins une cavité (22, 92) est soumise à la pression.

10. Ensemble d'étanchéité (10, 76) selon la revendication 9, **caractérisé en ce que** la zone de la surface latérale (16) réalisée dans la deuxième épaisseur de paroi (20) présente au moins une lèvre d'étanchéité périphérique (40), qui recouvre un espace libre (42).

11. Ensemble d'étanchéité (10, 76) selon la revendication 1, **caractérisé en ce que,** lors du démontage de la tête d'arrêt (16), ladite au moins une cavité (22) est éventée ou soumise à une dépression par une ouverture (94).

12. Ensemble d'étanchéité (10, 76) selon la revendication 8, **caractérisé en ce que** les bagues de serrage (80, 82; 84, 86) réalisées en une pièce ou en plusieurs pièces sont posées par des assemblages à baïonnette (98, 90) sur des côtés frontaux de la tête d'arrêt (76).

13. Ensemble d'étanchéité (10, 76) selon la revendication 1, **caractérisé en ce que** l'élément d'étanchéité (10) est soutenu sur son côté intérieur (78) par des épaulements d'appui (108), qui sont formés dans la surface latérale (96) de la tête d'arrêt (76).

14. Ensemble d'étanchéité (10,76) selon la revendication 9, **caractérisé en ce que** la zone de la surface latérale (16) formée dans la deuxième épaisseur de paroi (20) est munie d'une armature en tissu (120).

15. Ensemble d'étanchéité (10, 76) selon la revendication 14, **caractérisé en ce que** l'armature en tissu (120) est incorporée dans la surface latérale (16) ou s'étend sur le côté extérieur (26) de la surface latérale (16) de l'élément d'étanchéité soumis à la pression (10) vers le côté situé à l'opposé de la pression.

16. Ensemble d'étanchéité (10, 76) selon la revendication 14, **caractérisé en ce que** l'armature en tissu (120) est réalisée sous la forme d'une bande d'angle en PTFE, d'une couche de Nomex vulcanisée, d'une couche d'aramide, d'une bande d'angle en polyamide, d'une bande en acier à ressort, d'une couche de Kevlar ou d'une tôle d'angle fendue.

17. Ensemble d'étanchéité (10, 76) selon la revendication 7, **caractérisé en ce que** les surépaisseurs de type bourrelet (30, 32) sur les côtés frontaux (12, 14) s'étendent suivant des diamètres différents l'un de l'autre par rapport à l'axe de symétrie (36) de l'élément d'étanchéité soumis à la pression (10) et garantissent un montage de l'élément d'étanchéité soumis à la pression (10), de telle manière que ladite au moins une lèvre d'étanchéité périphérique (40) de celui-ci soit toujours tournée vers la pression pₐ à retenir.

18. Utilisation de l'ensemble d'étanchéité soumis à la pression (10, 76) selon une ou plusieurs des revendications précédentes, pour l'étanchéité de conduites transportant des fluides, comme par exemple des oléoducs (70) ou des gazoducs (70).

19. Utilisation de l'ensemble d'étanchéité soumis à la pression (10, 76) selon une ou plusieurs des revendications 1 à 17, pour l'étanchéité d'une ouverture de transport pour du pétrole ou du gaz dans la région amont du transport de pétrole ou de gaz.

20. Utilisation de l'ensemble d'étanchéité soumis à la pression (10, 76) selon une ou plusieurs des revendications 1 à 17, pour l'étanchéité de conduites (70) transportant de l'eau H₂O ou pour le réglage d'une section transversale d'écoulement restante.

21. Utilisation de l'ensemble d'étanchéité soumis à la pression (10, 76) selon une ou plusieurs des revendications 1 à 17, pour l'étanchéité de canalisations (70) et de soupapes transportant des boissons et des liquides alimentaires pour éviter la formation de germes dans des espaces morts et des coins.

22. Utilisation de l'ensemble d'étanchéité soumis à la pression (10, 76) selon une ou plusieurs des revendications 1 à 17 dans la fabrication de réservoirs ou dans la construction de chaudières pour l'étanchéité de canalisations (70) ou pour le réglage de sections transversales restantes à l'intérieur des canalisations (70) dans des installations de remplissage de liquides de toute nature.

23. Utilisation de l'ensemble d'étanchéité soumis à la pression (10, 76) selon une ou plusieurs des revendications 1 à 17 dans la fabrication de réservoirs ou dans la construction de chaudières pour l'amélioration de l'étanchéité de matières en vrac, de cristaux liquides destinés à la fabrication d'écrans LCD et analogues.

24. Utilisation de l'ensemble d'étanchéité soumis à la pression (10, 76) selon une ou plusieurs des revendications 1 à 17 dans la fabrication de réservoirs ou dans la construction de chaudières pour la régulation lors du remplissage et du dosage de débit volumique de matières en vrac, en particulier pour le réglage de la dimension de la fente de transport en fonction du niveau de pression existant.

25. Utilisation de l'ensemble d'étanchéité soumis à la pression (10, 76) selon une ou plusieurs des revendications 1 à 17, pour le réglage d'une fente de dosage ou d'une section transversale d'écoulement restante dans une canalisation (70).

26. Utilisation de l'ensemble d'étanchéité soumis à la pression (10, 76) selon une ou plusieurs des revendications 1 à 17 dans une canalisation (70) ou un pipeline (70), pour l'étanchéité d'un élargissement en forme de chambre (114, 116) ou pour le réglage de la fente restante dans ceux-ci.

27. Utilisation de l'ensemble d'étanchéité soumis à la pression (10, 76) selon une ou plusieurs des revendications 1 à 17, pour l'étanchéité sans jeu de portes et de fenêtres ainsi que pour l'étanchéité thermiquement isolante.

28. Utilisation de l'ensemble d'étanchéité soumis à la pression (10, 76) selon la revendication 27, pour l'exposition à la pression au moyen d'une pompe à air intégrée dans le mécanisme de porte lors de l'ouverture et de la fermeture, et qui fait en même temps office d'élément d'amortissement.
